# EUROPÄISCHE PATENTSCHRIFT

(11) **EP 3 049 487 B1**
(45) Veröffentlichungstag und Bekanntmachung des Hinweises auf die Patenterteilung: **21.03.2018**
(21) Anmeldenummer: 14749825.7
(22) Anmeldetag: 08.08.2014
(51) Int. Cl.: C09D 133/14, C09D 167/00, C09D 167/02

(54) **MEHRSTUFIGES BESCHICHTUNGSVERFAHREN UND DARAUS HERGESTELLTE, BEI NIEDRIGEN TEMPERATUREN HÄRTBARE BESCHICHTUNGEN SOWIE DEREN VERWENDUNG**
MULTISTAGE COATING METHOD AND LOW TEMPERATURE CURABLE COATINGS MADE THEREFROM AND THEIR USE
PROCÉDÉ DE REVÊTEMENT EN PLUSIEURS ETAPES, REVÊTEMENTS DURCISSABLES À BASSES TEMPÉRATURES AINSI FABRIQUÉS ET LEUR UTILISATION

(30) Priorität: 23.09.2013 EP 13185573
(43) Veröffentlichungstag der Anmeldung: 03.08.2016
(73) Patentinhaber: BASF Coatings GmbH, 48165 Münster (DE)
(72) Erfinder: CLAUSS, Reinhold, 48565 Steinfurt (DE); KLOPSCH, Rainer, 67551 Worms (DE); KRETH, Susanne Katharina, 48167 Münster (DE); SCHNIEDERS, Britta, 49716 Meppen (DE); HEIMEIER, Ursula, 48324 Sendenhorst (DE); CORTEN, Cathrin, 59423 Unna (DE); HOFFMANN, Peter, 48308 Senden (DE); FLORES-FIGUEROA, Aaron, 68163 Mannheim (DE); MICHEL, Kristin, 48324 Sendenhorst (DE); WERNING, Annika, 26121 Oldenburg (DE)
(74) Vertreter: BASF IP Association
(86) Internationale Anmeldenummer: PCT/EP2014/067076
(87) Internationale Veröffentlichungsnummer: WO 2015/039807

(56) Entgegenhaltungen:
- EP-A2- 0 272 664
- EP-A2- 0 881 262
- WO-A1-2013/144299

## Beschreibung

Di-e vorliegende Erfindung betrifft ein mehrstufiges Beschichtungsverfahren, bei dem auf ein gegebenenfalls vorbeschichtetes Substrat eine pigmentierte Basislackschicht und danach eine Schicht aus einer nichtwässrigen Beschichtungsmittelzusammensetzung enthaltend mindestens eine polyhydroxylgruppenhaltige Verbindung (A) und mindestens eine Verbindung (B) mit mindestens zwei Alkyliden-1,3-dioxolan-2-on-Gruppen. Gegenstand der vorliegenden Erfindung sind außerdem die aus diesen Beschichtungsmittelzusammensetzungen hergestellten Beschichtungen sowie deren Verwendung, insbesondere für die Automobilserienlackierung, die Automobilreparaturlackierung und die Beschichtung von Anbauteilen sowie von Kunststoffen.

Beschichtungsmittelzusammensetzungen auf der Basis von Polyurethanen (PUR) finden auf unzähligen Gebieten Verwendung, insbesondere für die Automobilserienlackierung und die Automobilreparaturlackierung. Allen Polyurethanen gemeinsam ist dabei, dass sie durch Polyaddition von Polyaminen oder Polyolen an mehrwertige Isocyanate hergestellt werden. Durch geschickte Auswahl der Polyamin- bzw. Polyolkomponente kann dabei das Eigenschaftsprofil des erhaltenen Polyurethans gezielt gesteuert werden.

Als nachteilig erweist sich die hohe Reaktivität der mehrwertigen Isocyanate, die zu einer hohen Feuchtigkeitsempfindlichkeit führt. Zwar sind mehrwertige Isocyanate unter wasserfreien Bedingungen über längere Zeit lagerbar, jedoch tritt die Reaktion mit Wasser bei der Aushärtung ein, so dass sehr trockenes Arbeiten notwendig ist. Über die Feuchtigkeitsempfindlichkeit hinaus neigen insbesondere die aromatischen Isocyanate zu Verfärbungen. Problematisch ist auch die gesundheitliche Bedenklichkeit einiger Diisocyanate. So ist bekannt, dass Diisocyanate bei Hautkontakt oder Inhalation Allergien auslösen können. Aus diesem Grund wurden Oligomere von Diisocyanaten entwickelt, die aufgrund ihrer geringeren Flüchtigkeit leichter zu handhaben sind. Dennoch besteht grundsätzlich ein

Bedarf an Alternativen für die aus dem Stand der Technik bekannten Polyisocyanate.

Alkyliden-1,3-dioxolan-2-one, die im Folgenden auch als exo-Vinylencarbonate bezeichnet werden, wurden verschiedentlich in der Literatur beschrieben, beispielsweise in DE 1098953, DE 3433403, EP 837062, JP 2006137733, JP 2008222619, J. Org. Chem. 2007, 72, 647-649, Angew. Chem. 2009, 121, 4258-4261, Eur. J. Org. Chem. 2007, 2604-2607, Eur. J. Org. Chem. 2008, 2309-2312, Org. Lett. 2006, 8, 515-518. Alkyliden-1,3-dioxolan-2-one werden dort als Synthesebausteine für die Herstellung von Wirk- und Effektstoffen vorgeschlagen.

Die WO 2011/157671 beschreibt die Verwendung von Alkyliden-1,3-dioxolan-2-onen zusammen mit aminischen Härtern als Additive in Epoxidharzzusammensetzungen.

Die WO 96/26224 beschreibt die Copolymerisation von 4-Vinyl-1,3-dioxolan-2-onen mit ethylenisch ungesättigten Comonomeren. Die dabei erhaltenen Polymere weisen 1,3-Dioxolan-2-on-Gruppen auf und werden zusammen mit aminofunktionellen Vernetzern zur Herstellung von Beschichtungen eingesetzt.

Aus der EP-B-1 448 619 sind 4-(Meth)acryloxyalkyl-1,3-dioxolan-2-one bekannt, die mit ethylenisch ungesättigten Comonomeren zu Copolymeren polymerisiert werden, welche über Alkyloxycarbonyl-Einheiten gebundene 1,3-Dioxolan-2-on-Gruppen aufweisen. Die Polymere werden mit aminischen Verbindungen umgesetzt, wobei man Pfropfpolymere erhält, die Urethan- und Hydroxylgruppen aufweisen. Die Pfropfpolymere werden in Beschichtungsmitteln, insbesondere Klarlacken, eingesetzt, die mit Hilfe üblicher Verbindungen mit reaktiven Gruppen, wie Hydroxylgruppen, Aminogruppen, Isocyanatgruppen, Epoxygruppen, Silangruppen, Acetoacetatgruppen, Vinylgruppen und Acrylatgruppen, bei erhöhten Temperaturen gehärtet werden.

Aus der EP 272664 sind außerdem härtbare Mischungen auf Basis von Verbindungen enthaltend 1,3-Dioxolan-2-on-Gruppen und zur Reaktion mit Isocyanatgruppen befähigte Gruppen, sowie Polvisocvanaten und/oder Aminoplastharzen, bekannt.

Die EP0881262 beschreibt eine härtbare Zusammensetzungen auf Basis von (A) freie Carboxylgruppen aufweisenden Polymeren auf Basis von Acrylat- und/oder Methacrylatmonomeren und (B) einem Vernetzungsmittel für die Komponente (A), wobei als Vernetzungsmittel Verbindungen mit einem Molekulargewicht von weniger als 800 verwendet werden, die mindestens zwei (2-Oxo-1,3-dioxolan-4-yl)methyl-Gruppen pro Molekül enthalten.

Aus der WO2012/130718 sind außerdem Polymere auf der Basis von (2-Oxo-1,3-dioxolan-4-yl)methylacrylat und (2-Oxo-1,3-dioxolan-4-yl)methylmethacrylat bekannt, die zusammen mit Di- oder Polyaminen in Beschichtungsmittelzusammensetzungen eingesetzt werden.

Die Reaktivität der aus dem Stand der Technik bekannten Polymere mit 1,3-Dioxolan-2-on-Gruppen ist jedoch nicht zufriedenstellend, insbesondere bei der Reaktion mit Alkoholen. Zudem werden bei der Umsetzung von 1,3-Dioxolan-2-onen mit beispielsweise Aminen oder Alkoholen Hydroxylgruppen gebildet, die sich in verschiedenen Anwendungen als nachteilig erweisen können.

Die nicht vorveröffentlichte internationale Patentanmeldung WO2013/144299 mit dem internationalen Aktenzeichen PCT/EP2013/056716 beschreibt nun polymerisierbare Alkyliden-1,3-dioxolan-2-on-Monomere, deren Herstellung und deren Verwendung zur Herstellung von den entsprechenden Homo- oder Copolymerisaten sowie deren Verwendung als Vernetzerkomponente in 2K-Beschichtungsmittelzusammensetzungen. Zur Vernetzung dieser carbonatgruppenhaltigen Polymeren werden neben hydroxylgruppenhaltigen Verbindungen insbesondere aminogruppenhaltige Verbindungen eingesetzt. Als alkoholische Härter werden dort Alkohole wie Propandiol, Butandiol, Pentandiol, Hexandiol, Ethylenglykol, Di- und Triethylenglykol, Neopentylglykol, Glycerin, Diglycerin, Pentaerythrit, Dipentaerythrit und Zuckeralkohole wie Sorbit und Mannit genannt, während höhermolekulare hydroxylgruppenhaltige Verbindungen nicht beschrieben sind.

### Aufgabe

Aufgabe der vorliegenden Erfindung war es daher, Beschichtungsverfahren zur Verfügung zu stellen, die zur Aushärtung der verwendeten Beschichtungsmittelzusammensetzungen keinen Zusatz von Polyisocyanaten und keinen Zusatz von Melamin-Formaldehydharzen erfordern. Ferner sollten die eingesetzten Beschichtungsmittelzusammensetzungen eine gute Reaktivität aufweisen, so dass sie unter den im Bereich der Automobilserienlackierung und der Automobilreparaturlackierung sowie im Bereich der Lackierung von Automobilanbauteilen und Nutzfahrzeugen üblichen Härtungsbedingungen eine ausreichende Vernetzung der resultierenden Beschichtung gewährleisten.

Außerdem sollten die Beschichtungsverfahren zu Beschichtungen führen, die eine möglichst niedrige Eigenfarbe - insbesondere im Fall des Überbrennens - aufweisen. Ferner sollten die im mehrstufigen Beschichtungsverfahren eingesetzten Beschichtungsmittelzusammensetzungen auch die üblicherweise an die Klarlackschicht bei der Automobilserienlackierung und der Automobilreparaturlackierung gestellten Anforderungen erfüllen.

Schließlich sollten die verwendetem Beschichtungsmittelzusammensetzungen einfach und sehr gut reproduzierbar herstellbar sein und während der Lackapplikation keine ökologischen Probleme bereiten.

### Lösung der Aufgabe

Im Lichte der obengenannten Aufgabenstellung wurde ein mehrstufiges Beschichtungsverfahren gefunden, bei dem auf ein gegebenenfalls vorbeschichtetes Substrat eine pigmentierte Basislackschicht und danach eine Schicht aus einer nichtwässrigen Beschichtungsmittelzusammensetzung, enthaltend
(A) mindestens eine oligomere und/oder polymere Verbindung (A) mit mindestens zwei Hydroxylgruppen,
(B) mindestens eine oligomere und/oder polymere Verbindung (B) mit mindestens zwei Alkyliden-1,3-dioxolan-2-on-Gruppen sowie
(D) mindestens einen Katalysator (D) für die Vernetzung,
aufgebracht wird, dadurch gekennzeichnet, dass
die Verbindung (B) mindestens zwei Alkyliden-1,3-dioxolan-2-on-Gruppen der Formel (I') 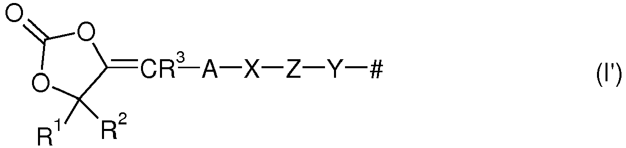 wobei # für die Anbindung an das Polymerrückgrat steht und
- R¹, R²: unabhängig voneinander für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl stehen;
- R³: für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
- A: für eine chemische Bindung oder C₁-C₄-Alkandiyl steht, wobei A insbesondere für C₁-C₄-Alkandiyl steht;
- X: für O oder NR⁷ steht;
- Z: für eine chemische Bindung, PO₂, SO₂ oder C=O steht, wobei Z insbesondere für C=O steht;
- Y: für eine chemische Bindung, CH₂ oder CHCH₃ steht, wobei Y insbesondere für eine chemische Bindung steht;
- R7: sofern vorhanden, für C₁-C₆-Alkyl steht;
enthält, gefunden.

Gegenstand der vorliegenden Erfindung sind außerdem die Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen und die mit diesem Verfahren hergestellten Mehrschichtlackierungen.

Es wurde nun überraschenderweise gefunden, dass die Verbindungen (B), die mindestens zwei Alkyliden-1,3-dioxolan-2-on-Gruppen der Formel (I') aufweisen, eine gegenüber den aus dem Stand der Technik bekannten Polymere mit 1,3-Dioxolan-2-on-Gruppen so deutlich erhöhte Reaktivität aufweisen, dass sie mit hydroxylgruppenhaltigen Härtern unter den im Bereich der Automobilserienlackierung und der Automobilreparaturlackierung sowie im Bereich der Lackierung von Automobilanbauteilen und Nutzfahrzeugen üblichen Härtungsbedingungen eine ausreichende Vernetzung der resultierenden Beschichtung gewährleisten.

Ferner zeichnen sich die erfindungsgemäß eingesetzten Beschichtungsmittelzusammensetzungen dadurch aus, dass sie zur Aushärtung keinen Zusatz von Polyisocyanaten und keinen Zusatz von Melamin-Formaldehydharzen erfordern und somit die mit diesen toxischen bzw. reizenden Verbindungen verbundenen ökologischen Probleme, insbesondere während der Lackapplikation, vermieden werden können.

Außerdem führen die Beschichtungsverfahren zu Beschichtungen, die eine möglichst niedrige Eigenfarbe - insbesondere im Fall des Überbrennens - aufweisen. Ferner erfüllen die Beschichtungsmittelzusammensetzungen auch die üblicherweise an die Klarlackschicht bei der Automobilserienlackierung und der Automobilreparaturlackierung gestellten Anforderungen.

Schließlich sind die Beschichtungsmittelzusammensetzungen einfach und sehr gut reproduzierbar herstellbar.

### Beschreibung der Erfindung

### Die erfindungsgemäß eingesetzten Beschichtungsmittel

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 1 g der jeweiligen Probe auf einen Festkörperdeckel aufgebracht und für 1 h bei 130°C erhitzt, auf Raumtemperatur abgekühlt und dann zurückgewogen (in Anlehnung an ISO 3251). Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungszusammensetzung einstellen und bestimmen zu können.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114 experimentell durch Titration bestimmt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungsindexdetektor bestimmt. Als Elutionsmittel wurde Tetrahydrofuran enthaltend 0.1Vol.-% Essigsäure mit einer Elutionsgeschwindigkeit von 1 ml/min verwendet. Die Kalibrierung wird mittels Polystyrol-Standards durchgeführt.

Die Glasübergangstemperatur Tg wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

Die Vernetzungsbeginntemperatur der Bindemittelmischungen (A) plus (B) plus ggf. (C) plus Katalysator (D) wird im Rahmen der Erfindung experimentell mittels Dynamisch-Mechanischer Analyse (DMA) bestimmt. Beschrieben ist diese Methode beispielsweise in der DIN EN ISO 6721-1, wobei die Methode in dieser Norm im Rahmen der Bestimmung dynamisch-mechanischer Eigenschaften von Kunststoffen erläutert wird. Bei der DMA werden durch Anwendung einer oszillierenden Kraft auf die Probe frequenz- und temperaturabhängig die viskoelastischen Eigenschaften (das heißt die Steifigkeit, ausgedrückt durch das gemessene Speichermodul E', und die dissipierte Arbeit pro Schwingung, ausgedrückt durch das gemessene Verlustmodul E") der Probe erfasst. Je steifer ein Material ist, desto größer ist der Betrag des Speichermoduls, das heißt das Material setzt seiner elastischen Verformung einen größeren Widerstand entgegen. Für eine Zusammensetzung von vernetzbaren Polymerketten, beispielsweise der Bindemittelmischung (A), (B), ggf. (C) und (D), steigt die Steifigkeit an, wenn die Vernetzung der einzelnen Polymerketten untereinander beginnt und sich damit aus einer Mischung einzelner Polymerketten ein komplexes Netzwerk beziehungsweise ein Film bildet. Im Rahmen der vorliegenden Erfindung wird mit der DMA durch Belastung der Probe mit einer sinusförmigen Schwingung konstanter Amplitude und Frequenz bei kontinuierlicher Temperaturerhöhung das Speichermodul bestimmt. Die Temperatur, bei der das Speichermodul beginnt anzusteigen, wird im Rahmen der vorliegenden Erfindung als Vernetzungsbeginntemperatur der Bindemittelmischung bezeichnet. Die Messungen wurden mit einem Gerät des Typs Triton 2000D der Firma Triton Technology durchgeführt. Dabei wird 1 g des jeweiligen zu vermessenden Bindemittelmischungen (A) plus (B) plus ggf. (C) plus Katalysator (D) (Festkörper 50 %, eingestellt mit Butylacetat) auf ein in das Messgerät eingespanntes Glasfasernetz gegeben und bei kontinuierlicher Temperaturerhöhung von 2°C pro Minute bei sinusförmiger Probenbelastung (konstante Frequenz, konstante Amplitude im linearen Messbereich) das Speichermodul E' gemessen. Die Messung erfolgt üblicherweise in einem für die Probe relevanten Temperaturbereich von etwa 2 bis 200°C. Die Vernetzungsbeginntemperatur ("Onset-Temperatur") wird dann graphisch aus dem Speichermodul/Temperaturdiagramm ermittelt und ist die Temperatur des Schnittpunkts der extrapolierten Basislinie des Speichermoduls vor der einsetzenden Vernetzung und der extrapolierten Geraden, die sich aus dem quasi-linearen Anstiegsbereich des Speichermoduls nach dem Einsetzen der Vernetzung ergibt. Auf diese Weise kann die Vernetzungsbeginntemperatur problemlos auf +/- 2°C genau bestimmt werden.

### Die polyhydroxylgruppenhaltige Verbindung (A)

Als polyhydroxylgruppenhaltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen zahlenmittlere Molekulargewichte Mn >= 300 Dalton, bevorzugt Mn = 400 - 30.000 Dalton, besonders bevorzugt Mn = 500 - 15.000 Dalton, und massenmittlere Molekulargewichte Mw > 500 Dalton, bevorzugt zwischen 800 und 100.000 Dalton, insbesondere zwischen 900 und 50.000 Dalton, gemessen mittels Gelpermeationschromatographie (GPC) gegen einen Polystyrolstandard auf.

Bevorzugt sind Polyesterpolyole, Polyacrylatpolyole und/oder Polymethacrylatpolyole sowie deren Mischpolymerisate - im folgenden Polyacrylatpolyole genannt -, Polyurethanpolyole, Polysiloxanpolyole und Mischungen dieser Polyole.

Die Polyole (A) weisen bevorzugt eine OH-Zahl von 30 bis 400 mg KOH/g, insbesondere zwischen 70 und 300 mg KOH/g, auf. Im Falle der Poly-(Meth)-AcrylatCopolymerisate kann die OH-Zahl auch durch Berechnung auf Basis der eingesetzten OH-funktionellen Monomere ausreichend genau bestimmt werden.

Die Polyole (A) weisen bevorzugt eine Säurezahl zwischen 0 und 30 mg KOH/g auf. Da überraschenderweise gefunden wurde, dass der Beginn der Vernetzungsreaktion bei umso niedrigerer Temperatur (sogenannte "Onset-Temperatur) liegt, je niedriger die Säurezahl des Polyols (A) ist, werden insbesondere Polyole (A) eingesetzt, die eine Säurezahl zwischen 0 und 10 mg KOH/g, bevorzugt zwischen 0 und 5 mg KOH/g und ganz besonders bevorzugt von weniger als 1 mg KOH/g, aufweisen.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Polyurethanpolyole werden vorzugsweise durch Umsetzung von oligomeren Polyolen, insbesondere von Polyesterpolyol-Präpolymeren, mit geeigneten Di- oder Polyisocyanaten hergestellt und sind beispielsweise in EP-A-1 273 640 beschrieben. Insbesondere werden Umsetzungsprodukte von Polyesterpolyolen mit aliphatischen und/oder cycloaliphatischen Di- und/oder Polyisocyanaten eingesetzt.

Die erfindungsgemäß bevorzugt eingesetzten Polyurethanpolyole weisen ein zahlenmittleres Molekulargewicht Mn >= 300 Dalton, bevorzugt Mn = 700 - 2.000 Dalton, besonders bevorzugt Mn = 700 - 1.300 Dalton, sowie vorzugsweise ein massenmittleres Molekulargewicht Mw > 500 Dalton, bevorzugt zwischen 1.500 und 3.000 Dalton, insbesondere zwischen 1.500 und 2.700 Dalton auf, jeweils gemessen mittels Gelpermeationschromatographie (GPC) gegen einen Polystyrolstandard.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Als polyhydroxylgruppenhaltige Verbindung (A) werden besonders bevorzugt Polyesterpolyole, Polyacrylatpolyole, Polymethacrylatpolyole, Polyurethanpolyole oder deren Mischungen und ganz besonders bevorzugt Polyesterpolyole oder Mischungen von Polyesterpolyolen mit Poly(meth)acrylatpolyolen eingesetzt.

Die erfindungsgemäß bevorzugt eingesetzten Polyesterpolyole weisen ein zahlenmittleres Molekulargewicht Mn >= 300 Dalton, bevorzugt Mn = 400 - 10.000 Dalton, besonders bevorzugt Mn = 500 - 5.000 Dalton, sowie vorzugsweise ein massenmittleres Molekulargewicht Mw > 500 Dalton, bevorzugt zwischen 800 und 50.000 Dalton, insbesondere zwischen 900 und 10.000 Dalton auf, jeweils gemessen mittels Gelpermeationschromatographie (GPC) gegen einen Polystyrolstandard.

Die erfindungsgemäß bevorzugt eingesetzten Polyesterpolyole weisen bevorzugt eine OH-Zahl von 30 bis 400 mg KOH/g, insbesondere zwischen 100 und 300 mg KOH/g, auf.

Die erfindungsgemäß bevorzugt eingesetzten Polyesterpolyole (A) weisen bevorzugt eine Säurezahl zwischen 0 und 30 mg KOH/g auf. Da überraschenderweise gefunden wurde, dass der Beginn der Vernetzungsreaktion bei umso niedrigerer Temperatur (sogenannte "Onset-Temperatur) liegt, je niedriger die Säurezahl des Polyols (A) ist, werden insbesondere Polyesterpolyole (A) eingesetzt, die eine Säurezahl zwischen 0 und 25 mg KOH/g, bevorzugt zwischen 0 und 5 mg KOH/g und ganz besonders bevorzugt von weniger als 1 mg KOH/g, aufweisen.

Als Polyester wird in der Regel eine polymere organische Verbindung bezeichnet, die unter Einsatz mehrwertiger organischer Polyole und mehrwertiger organischer Carbonsäuren hergestellt wird. Die Polyole und Polycarbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Ganz allgemein können bei der Herstellung von Polyestern Polycarbonsäuren und Polyole, beispielsweise aliphatische Polycarbonsäuren und aliphatische Polyole zum Einsatz kommen.

Aliphatische Verbindungen sind bekanntermaßen acyclische oder cyclische, gesättigte oder ungesättigte Kohlenstoffwasserstoffverbindungen. Der Begriff aliphatische Verbindung umfasst also acyclische und cyclische Aliphaten und gilt auch im Rahmen der vorliegenden Erfindung als entsprechender Oberbegriff. Im Rahmen der vorliegenden Erfindung werden die nicht cyclischen Aliphaten als acyclische Aliphaten und die cyclischen Aliphaten als Cycloaliphaten bezeichnet. Die acyclischen Aliphaten können linear oder verzweigt sein. Linear bedeutet bekanntermaßen, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nicht-linear bedeutet damit im Rahmen der vorliegenden Erfindung, dass die jeweils betrachtete Verbindung eine Verzweigung in der Kohlenstoffkette aufweist, das heißt also mindestens ein Kohlenstoffatom der jeweiligen Verbindung ein tertiäres Kohlenstoffatom ist. Als Cycloaliphaten werden bekanntermaßen solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische lineare oder verzweigte aliphatische Gruppen vorhanden sein.

Als aliphatische Polycarbonsäure werden folglich solche Polycarbonsäuren bezeichnet, die neben ihren Carbonsäuregruppen aliphatische Gruppen aufweisen, also aus Carbonsäuregruppen und aliphatischen Gruppen bestehen. Diese Form der Bezeichnung gilt auch für alle weiteren im Rahmen der vorliegenden Erfindung genannten Verbindungsklassen, beispielsweise die bereits genannten Polyole.

Ebenfalls zum Einsatz kommen können aromatische Polycarbonsäuren und aromatische Polyole oder auch Polycarbonsäuren und Polyole, die neben den ihre Verbindungsklasse bezeichnenden funktionellen Gruppen sowohl (lineare, verzweigte und/oder cyclische) aliphatische als auch aromatische Gruppen aufweisen. Ebenso möglich ist der Einsatz von linearen, verzweigten und/oder cyclischen aliphatischen und/oder aromatischen Hydroxycarbonsäuren sowie Lactonen, das heißt also Hydroxycarbonsäuren und Lactonen, die neben den ihre Verbindungsklasse bezeichnenden funktionellen Gruppen lineare, verzweigte und/oder cyclische aliphatische und/oder aromatische Gruppen aufweisen.

Geeignete Diole sind beispielsweise Glykole, wie Ethylenglykol, Propylenglykol, Butylenglykol, Butandiol-1,4, Hexandiol-1,6, Neopentylglykol, und andere Diole, wie 1,4-Dimethylolcyclohexan oder 2-Butyl-2-Ethyl-1,3-Propandiol. Wenn der erfindungsgemäß eingesetzte Polyester Diole als Aufbaukomponenten enthält, dann sind vorzugsweise die genannten Diole die einzigen enthaltenen Diole.

Geeignete höherfunktionelle Alkohole (OH-Funktionalität größer 2) sind beispielsweise Trimethylolpropan, Glycerin, Pentaerythrit, Dipentaerythrit und Tris(2-hydroxyethyl)isocyanurat. Vorzugsweise sind die genannten höherfunktionellen Alkohole die einzigen enthaltenen höherfunktionellen Alkohole. Besonders bevorzugt enthält der erfindungsgemäß eingesetzte Polyester Tris(2-hydroxyethyl)-isocyanurat und/oder Pentaerythrit.

Die Säurekomponente eines Polyesters umfasst in der Regel Dicarbonsäuren oder ihre Anhydride mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden.

Es können auch höherfunktionelle Carbonsäuren mit 3 oder mehr Carboxylgruppen (beziehungsweise die entsprechenden Anhydride), beispielsweise Trimellithsäureanhydrid eingesetzt werden.

Es können ggf. auch anteilig Monocarbonsäuren, wie beispielsweise ungesättigte Fettsäuren, verwendet werden. Ebenfalls können anteilig auch Glycidester gesättigter aliphatischer Monocarbonsäuren, bei denen die Carboxylgruppe an ein teriäres C-Atom gebunden ist, eingesetzt werden. Insbesondere kommt hier der Glycidester der Versaticsäure in Betracht. Dieser ist im Handel beispielsweise unter der Bezeichnung Cardura® E10 erhältlich. Diese Glycidester gesättigter aliphatischer Monocarbonsäuren werden insbesondere zur Erniedrigung der Säurezahl der erfindungsgemäß eingesetzten Polyesterpolyole (A) eingesetzt. Ebenfalls kann die Säurezahl der erfindungsgemäß eingesetzten Polyesterpolyole (A) in dem Fachmann bekannter Weise durch Umsetzung der restlichen Carboxylgruppen mit anderen monofunktionellen, mit Carboxylgruppen reaktiven Verbindungen, wie beispielsweise weiteren Epoxyverbindungen, Alkoholen oder Aminen, erniedrigt werden.

Einsetzbare Hydroxycarbonsäuren sind beispielsweise Hydroxycapronsäure, Hydroxybuttersäure, Hydroxydecansäure und/oder 12-Hydroxystearinsäure. Einsetzbare Lactone sind beispielsweise die an sich bekannten beta-, gamma-, delta- und epsilon-Lactone.

Neben den oben beschriebenen monomeren Verbindungen können beispielsweise auch bereits polymere Ausgangsprodukte eingesetzt werden, beispielsweise als Diole die an sich bekannten Polyesterdiole, die durch Umsetzung eines Lactons mit einem zweiwertigen Alkohol erhalten werden.

Besonders bevorzugt enthält der erfindungsgemäß eingesetzte Polyester (A) als Aufbaukomponenten Tris(2-hydroxyethyl)isocyanurat und/oder Pentaerythrit, das Anhydrid einer cycloaliphatischen Dicarbonsäure und/oder das Anhydrid einer aromatischen Dicarbonsäure und/oder den Glycidester der Versaticsäure.

Die Herstellung von Polyestern weist keine verfahrenstechnischen Besonderheiten auf und erfolgt in der Regel über die an sich üblichen und bekannten Polymerisationsverfahren, insbesondere Polykondensationsverfahren, beispielsweise in Masse oder Lösung bei Temperaturen von vorzugsweise 50 bis 300 °C, wobei gegebenenfalls die hierfür typischen Katalysatoren wie beispielsweise Säuren (beispielsweise konzentrierte Schwefelsäure), Dibutylzinnlaurat oder weitere, beispielsweise unter der Handelsbezeichnung Fascat erhältliche zinnbasierte Katalysatoren zum Einsatz kommen (beispielsweise Fascat 4100). Das aus der Kondensationsreaktionen entstehende Wasser wird typischerweise mit Hilfe eines Wasserabscheiders entfernt.

Geeignete Polyesterpolyole sind beispielsweise auch in EP-A-0 994 117 und EP-A-1 273 640 beschrieben.

Die erfindungsgemäß eingesetzten Poly(meth)acrylatpolyole sind in der Regel Copolymerisate und weisen vorzugsweise ein zahlenmittleres Molekulargewicht Mn >= 300 Dalton, bevorzugt Mn = 500 - 15.000 Dalton, besonders bevorzugt Mn = 900 - 10.000 Dalton, sowie vorzugsweise massenmittlere Molekulargewichte Mw zwischen 500 und 20.000 Dalton, insbesondere zwischen 1.000 und 15.000 Dalton auf, jeweils gemessen mittels Gelpermeationschromatographie (GPC) gegen einen Polystyrolstandard.

Die Glasübergangstemperatur der Copolymerisate liegt in der Regel zwischen - 100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 mg KOH/g, sowie eine Säurezahl zwischen 0 und 30 mg KOH/g auf.

Die Hydroxylzahl (OH-Zahl) und die Säurezahl werden wie oben beschrieben bestimmt (DIN 53240-2 bzw. DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Bevorzugt enthält das erfindungsgemäß eingesetzte Beschichtungsmittel von 10 bis 69,99 Gew.-%, bevorzugt von 20 bis 59,9 Gew.-%,
mindestens eines hydroxylgruppenhaltigen Polyesters (A) oder mindestens eines hydroxylgruppenhaltigen Poly(meth)acrylates (A) oder mindestens eines hydroxylgruppenhaltigen Polyurethans (A) oder einer Mischung aus mindestens einem hydroxylgruppenhaltigen Polyester (A) und mindestens einem hydroxylgruppenhaltigen Poly(meth)acrylat (A) oder einer Mischung aus mindestens einem hydroxylgruppenhaltigen Polyester (A) und mindestens einem hydroxylgruppenhaltigen Polyurethan (A) oder einer Mischung aus mindestens einem hydroxylgruppenhaltigen Poly(meth)acrylat (A) und mindestens einem hydroxylgruppenhaltigen Polyurethan (A) oder einer Mischung aus mindestens einem hydroxylgruppenhaltigen Polyester (A) und mindestens einem hydroxylgruppenhaltigen Poly(meth)acrylat (A) und mindestens einem hydroxylgruppenhaltigen Polyurethan (A),
wobei die Mengenangaben jeweils bezogen sind auf den Bindemittelanteil des Beschichtungsmittels [also bezogen auf das Gesamtgewicht des Bindemittelanteils der erfindungsgemäßen Verbindungen (B) mit funktionellen Gruppen der Formel I' plus des Bindemittelanteils des Polyols (A) plus des Bindemittelanteils der Komponente (C) plus Gewicht des Katalysators (D)].

### Hydroxylgruppenhaltige Verbindungen (C)

Die erfindungsgemäß eingesetzten Beschichtungsmittelzusammensetzungen können ggf. außer der polyhydroxylgruppenhaltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, jeweils bezogen auf den Bindemittelanteils des Beschichtungsmittels [also bezogen auf das Gesamtgewicht des Bindemittelanteils der erfindungsgemäßen Verbindungen (B) mit funktionellen Gruppen der Formel I' plus des Bindemittelanteils des Polyols (A) plus des Bindemittelanteils der Komponente (C) plus Gewicht des Katalysators (D)], ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Di- und Tri-ethylenglykol, Neopentylglykol, 1,2-Propandiol, 2,2-Dimethyl-1,3-Propandiol,1,4-Butandiol, 1,3-Butandiol, 1,5-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Verbindungen (B) mit mindestens zwei Alkyliden-1,3-dioxolan-2-on-Gruppen der Formel (I')

Es ist erfindungswesentlich, dass die erfindungsgemäß eingesetzten Verbindungen (B) mindestens zwei Alkyliden-1,3-dioxolan-2-on-Gruppen der Formel (I') enthalten: 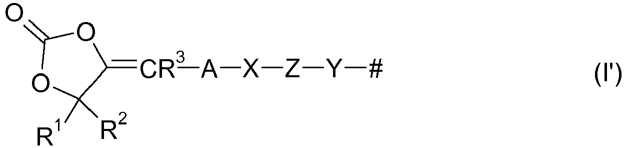 wobei # für die Anbindung an das Polymerrückgrat steht und
- R¹, R²: unabhängig voneinander für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl stehen;
- R³: für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
- A: für eine chemische Bindung oder C₁-C₄-Alkandiyl steht, wobei A insbesondere für C₁-C₄-Alkandiyl steht;
- X: für O oder NR⁷ steht;
- Z: für eine chemische Bindung, PO₂, SO₂ oder C=O steht, wobei Z insbesondere für C=O steht;
- Y: für eine chemische Bindung, CH₂ oder CHCH₃ steht, wobei Y insbesondere für eine chemische Bindung steht;
- R7: sofern vorhanden, für C₁-C₆-Alkyl steht.

Derartige Verbindungen (B) weisen in Kombination mit den hydroxylgruppenhaltigen Verbindungen (A) eine hohe Reaktivität auf, ohne die mit Isocyanaten verbundenen Nachteile zu besitzen. Sie eignen sich daher in besonderer Weise als Ersatz für polyfunktionelle Isocyanate in zahlreichen Anwendungen, insbesondere für Beschichtungsmittelzusammensetzungen für die Automobilserienlackierung, die Automobilreparaturlackierung und die Beschichtung von Anbauteilen sowie von Kunststoffen.

Es wurde überraschend gefunden, dass die im Folgenden näher beschriebenen Verbindungen (B) durch Polymerisation unter Verwendung von ethylenisch ungesättigten Monomeren, die eine Alkyliden-1,3-dioxolan-2-on-Gruppe und eine weitere ethylenisch ungesättigte Doppelbindung aufweisen, unter Erhalt der Alkyliden-1,3-dioxolan-2-on-Gruppe hergestellt werden können. Dies ist überraschend, da in der Literatur verschiedentlich beschrieben wird, dass die Methylengruppe in Methylen-1,3-dioxolan-2-onen unter radikalischen Bedingungen polymerisiert, siehe beispielsweise in Journal of Network Polymer, Japan 2005, 26, 132-137, Makromol. Chem., Rapid Commun. 1989, 10, 453-456.

Hier und im Folgenden gibt das zur Definition von Substituenten und chemischen Verbindungen verwendete Präfix "Cₙ-Cₘ-" die Anzahl möglicher C-Atome des Substituenten bzw. der Verbindung an.

Werden keine anderen Angaben gemacht, so gelten im Rahmen der vorliegenden Erfindung für die im Zusammenhang mit den Substituenten verwendeten Begriffe die folgenden allgemeinen Definitionen:
"Alkyl" steht für einen linearen oder verzweigten Alkylrest mit beispielsweise 1 bis 4 (C₁-C₄-Alkyl), 1 bis 6 (C₁-C₆-Alkyl) oder 1 bis 20 Kohlenstoffatomen (C₁-C₂₀-Alkyl). Beispiele für C₁-C₄-Alkyl sind Methyl, Ethyl, n-Propyl, iso-Propyl, n-Butyl, 2-Butyl, iso-Butyl, tert.-Butyl (2-Methylpropan-2-yl). Beispiele für C₁-C₆-Alkyl sind neben den für C₁-C₄-Alkyl genannten Bedeutungen weiterhin n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl. Beispiele für C₁-C₂₀-Alkyl sind neben den für C₁-C₆-Alkyl genannten Bedeutungen weiterhin Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl und deren Konstitutionsisomere.

"C₁-C₄-Alkoxy-C₁-C₄-alkyl" steht für eine über ein Sauerstoffatom gebundene Alkylgruppe mit 1 bis 4 Kohlenstoffatomen, wie z. B. Methoxy, Ethoxy, n-Propoxy, 1-Methylethoxy (Isopropoxy), n-Butoxy, 1-Methylpropoxy (sec.-Butoxy), 2-Methylpropoxy (Isobutoxy) oder 1,1-Dimethylethoxy (tert.-Butoxy), die in Form einer Etherbindung über den Sauerstoff an eine wie zuvor definierte C₁-C₄-Alkylgruppe gebunden ist. Beispiele sind Methoxymethyl, 2-Methoxyethyl, Ethoxymethyl, 3-Methoxypropyl, 3-Ethoxypropyl.

"C₅-C₆-Cycloalkyl" steht für einen cyclischen Alkylrest mit 5 bis 6 Kohlenstoffatomen. Beispiele sind Cyclopentyl und Cyclohexyl.

"Phenyl-C₁-C₄-alkyl" steht für eine Phenylgruppe, die an eine wie zuvor definierte C₁-C₄-Alkylgruppe gebunden ist. Beispiele sind Benzyl, Phenylethyl, Phenylpropyl, Phenylbutyl.

"C₁-C₄-Alkandiyl" steht für ein Alkandiyl mit 1 bis 4 Kohlenstoffatomen. Beispiele sind Methandiyl, 1,1-Ethandiyl, 1,2-Ethandiyl, 1-Methyl-1,1-ethandiyl, 1-Methyl-1,2-ethandiyl, 1,3-Propandiyl, 1,4-Butandiyl, 1,1-Dimethyl-1,2-ethandiyl und 1,2-Dimethyl-1,2-ethandiyl.

"C₁-C₈-Alkoxy" steht für eine über ein Sauerstoffatom gebundene Alkylgruppe mit 1 bis 8 Kohlenstoffatomen. Beispiele sind Methoxy, Ethoxy, n-Propoxy, 1-Methylethoxy (Isopropoxy), n-Butoxy, 1-Methylpropoxy (sec.-Butoxy), 2-Methylpropoxy (Isobutoxy), 1,1-Dimethylethoxy (tert.-Butoxy), n-Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, 2-Ethylpropoxy, n-Hexoxy, 1-Methylpentoxy, 2-Methylpentoxy, 3-Methylpentoxy, 4-Methylpentoxy, 1-Ethylbutoxy, 2-Ethylbutoxy, 3-Ethylbutoxy, 1,2-Dimethylbutoxy, 1,3-Dimethylbutoxy, 2,3-Dimethylbutoxy, 1-Ethyl-2-methylpropoxy und 1-Isopropylpropoxy.

"C₁-C₄-Alkylcarbonyl" steht für einen über eine Carbonylgruppe gebundenen C₁-C₄-Alkylrest wie zuvor definiert, z. B. für Acetyl, Propionyl, Butyryl, Pivaloyl etc.

Im Hinblick auf bevorzugte Ausführungsformen der Erfindung weisen die Reste bzw. Gruppen R¹, R², R³, R⁴, R⁵, R⁶, R⁷, R⁸, A, X, Z und Y in den Verbindungen der Formel I und den Gruppen der Formel I' unabhängig voneinander vorzugsweise eine oder mehrere oder alle der folgenden Bedeutungen auf:
- R¹: steht für Wasserstoff oder C₁-C₆-Alkyl, insbesondere für Wasserstoff oder C₁-C₄-Alkyl und speziell für Methyl oder Ethyl;
- R²: steht für Wasserstoff oder C₁-C₆-Alkyl, insbesondere für C₁-C₄-Alkyl und speziell für Methyl oder Ethyl;
- R³: steht für Wasserstoff;
- A: steht für C₁-C₄-Alkandiyl, insbesondere für Methandiyl, 1,2-Ethandiyl oder 1,3-Propandiyl, besonders bevorzugt 1,2-Ethandiyl;
- X: steht für O;
- Z: steht für C=O;
- Y: steht für eine chemische Bindung;
- R⁴: steht für Wasserstoff oder C₁-C₄-Alkyl, insbesondere für Wasserstoff oder Methyl;
- R⁵: steht für Wasserstoff;
- R⁶: steht für Wasserstoff;
- R⁷: sofern vorhanden, steht für C₁-C₄-Alkyl;
- R⁸: sofern vorhanden, steht für C₁-C₄-Alkyl.

Die Herstellung der Verbindungen der Formel I gelingt in der Regel durch das im Folgenden näher erläuterte Verfahren, bei dem man eine Verbindung der allgemeinen Formel II mit einer Verbindung der allgemeinen Formel III umsetzt:

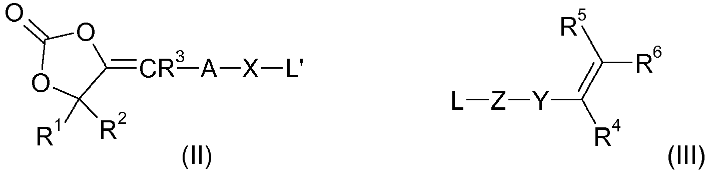

In Formel II steht L' für Wasserstoff oder eine Hydroxyl- oder Amino-Schutzgruppe, z. B. eine C₁-C₄-Alkylcarbonylgruppe. Die Variablen A, X, R¹, R² und R³ weisen die oben genannten Bedeutungen, insbesondere die als bevorzugt genannten Bedeutungen, auf.

In Formel III steht L für eine nucleophil verdrängbare Abgangsgruppe, beispielsweise Halogen, OH oder C₁-C₈-Alkoxy. Die Variablen Y, Z, R⁴, R⁵ und R⁶ weisen die oben genannten Bedeutungen, insbesondere die als bevorzugt genannten Bedeutungen, auf.

Die Umsetzung der Verbindungen der Formeln II und III kann in Analogie zu bekannten Verfahren der nucleophilen Substitution durchgeführt werden. Sofern L' für eine Hydroxyl- oder Amino-Schutzgruppe steht, wird in der Regel diese Schutzgruppe vor der Umsetzung von Verbindung II mit Verbindung III entfernt, oder es werden Reaktionsbedingungen gewählt, unter denen die Schutzgruppe abgespalten wird, so dass der eigentliche Reaktant die Verbindung der Formel II ist, worin L' für Wasserstoff steht.

Gemäß einer bevorzugten Ausführungsform der Erfindung stehen in Formel III die Variablen Z für C=O und L für OH oder C₁-C₈-Alkoxy. In diesem Fall gelingt die Umsetzung von Verbindung III mit Verbindung II, gegebenenfalls nach Entfernung der Hydroxyl- oder Amino-Schutzgruppe, im Sinne einer Amidierung oder Veresterungs- bzw. Umesterungsreaktion.

Insbesondere eignet sich die Veresterung bzw. Umesterung für die Herstellung von Verbindungen der Formel I, worin Z für C=O und X für O steht, A für C₁-C₄-Alkandiyl steht, R⁴ Wasserstoff oder C₁-C₄-Alkyl, speziell Wasserstoff oder Methyl, bedeutet und R⁵ und R⁶ für Wasserstoff stehen. In diesem Fall sind bevorzugte Reaktanten der Formel III ausgewählt unter den C₁-C₈-Alkylestern der Acrylsäure und der Methacrylsäure, im Folgenden (Meth)acrylsäure-C₁-C₈-alkylester, z. B. (Meth)acrylsäuremethyl-, -ethyl-, -n-butyl- und -2-ethylhexylester und ganz besonders bevorzugt (Meth)acrylsäure-C₁-C₄-alkylester, z. B. (Meth)acrylsäuremethyl-, - ethyl- und -n-butylester.

Gemäß einer besonders bevorzugten Ausführungsform der Erfindung stehen in Formel III die Variablen L für OH oder C₁-C₈-Alkoxy, Z für C=O und in Formel II X für O und die Umsetzung von Verbindung II mit Verbindung III wird unter den Bedingungen einer Veresterung oder Umesterung durchgeführt. In einer speziellen Ausgestaltung dieser Ausführungsform steht L' in Formel II für Wasserstoff oder eine C₁-C₄-Alkylcarbonylgruppe, speziell eine Acetylgruppe.

In einer bevorzugten Ausführungsform erfolgt die Herstellung der Verbindungen der Formel I durch Veresterung bzw. Umesterung unter Enzym-Katalyse.

Die Enzym-katalysierte Veresterung bzw. Umesterung kann in Analogie zu den in Biotechnol. Lett. 1990, 12, 825-830, Biotechnol. Lett. 1994, 16, 241-246, US 5240835, WO 2004/05088 oder DE 102009003035 beschriebenen Methoden durchgeführt werden, auf die hier vollumfänglich Bezug genommen wird.

Für die Enzym-katalysierte Veresterung bzw. Umesterung einsetzbare Enzyme (E) sind beispielsweise ausgewählt unter Hydrolasen, Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen. Besonders bevorzugt sind Novozym® 435 der Fa. Novozymes (Lipase aus Candida antarctica B) oder Lipase aus Aspergillus sp., Aspergillus niger sp., Mucor sp., Penicillium cyclopium sp., Geotricum candidum sp., Rhizopus javanicus, Burkholderia sp., Candida sp., Pseudomonas sp. oder Schweinepankreas, ganz besonders bevorzugt sind Lipase aus Candida antartica B oder aus Burholderia sp.

Der Enzymgehalt im Reaktionsmedium liegt in der Regel im Bereich von etwa 0,1 bis 10 Gew.-%, bezogen auf die Summe der eingesetzten Reaktanten der Formel II und III.

Die Herstellung der Verbindungen der Formel I kann auch durch konventionelle Veresterung oder Umesterung unter den hierfür üblichen Reaktionsbedingungen einer säurekatalysierten Veresterung oder einer säure- oder basenkatalysierten Umesterung erfolgen.

Als saure Katalysatoren für eine säurekatalysierte Veresterung eignen sich vor allem Protonensäuren, beispielsweise Schwefelsäure, Natriumhydrogensulfat, Salzsäure, Phosphorsäure, Mononatriumdihydrogenphosphat, Dinatriumhydrogenphosphat, Pyrophosphorsäure, phosphorige Säure, unterphosphorige Säure, Methansulfonsäure, Trifluormethansulfonsäure, p-Toluolsulfonsäure sowie deren Gemische. Geeignet sind auch Lewissäuren wie z. B. Ti- und Sn-Verbindungen. Außerdem geeignet sind saure lonentauscherharze, z. B. sulfonierte oder carboxylierte lonentauscherharze, jeweils in ihrer sauren Form.

Als basische Katalysatoren für eine Umesterung eignen sich Metallhydroxide und/oder -alkoholate, insbesondere von Metallen der 1., 2. und 13. Gruppe des Periodensystems, beispielsweise Alkalimetallhydroxide wie NaOH oder KOH sowie Alkalimetall- und Erdalkalimetallalkanolate, insbesondere die entsprechenden Methanolate oder Ethanolate wie Natrium- oder Kaliummethanolat oder Natrium- oder Kaliumethanolat. Außerdem geeignet sind ionenaustauschende Harze.

Die sauren oder basischen Katalysatoren werden in der Regel in einer Konzentration von 0,0001 Gew.-% bis 20 Gew.-%, bevorzugt 0,001 Gew.-% bis 10 Gew.-%, bezogen auf die gesamte Reaktionsmischung, eingesetzt.

Die Veresterungs- bzw. Umesterungsreaktion von II mit III kann beispielsweise als Batch-Verfahren gestaltet werden. Hierbei wird man in der Regel die Verbindungen der Formeln II und III in ein Reaktionsgefäß geben und unter Zugabe des Katalysators bzw. des Enzyms miteinander umsetzten. Alternativ kann die Veresterungs- bzw. Umesterungsreaktion als Semi-Batch-Verfahren gestaltet werden. Hierzu kann man beispielsweise einen der Reaktanten, z. B. die Verbindung II oder Verbindung III, sowie den Katalysator bzw. das Enzym vorlegen und den anderen Reaktanten im Laufe der Reaktion zuführen. Außerdem kann die Verbindung der Formel I durch kontinuierliche Umsetzung der Verbindung II mit der Verbindung III hergestellt werden. Hierzu wird man beispielsweise die Verbindungen II und III kontinuierlich einer Reaktionszone, welche den Katalysator enthält, zuführen und die Verbindung der Formel I, gegebenenfalls zusammen mit den bei der Reaktion gebildeten Koppelprodukten, z. B. Alkohol oder Ester, kontinuierlich der Reaktionszone entnehmen. Gegebenenfalls wird man den Katalysator bzw. das Enzym ebenfalls der Reaktionszone zuführen. Sowohl bei der Semi-Batch-, als auch bei der kontinuierlichen Umsetzung kann man die Reaktanten, d. h. die Verbindungen der Formeln II und III, vorzugsweise in flüssiger Phase, durch eine Reaktionszone führen, welche den Katalysator bzw. das Enzym als stationäre Phase enthält.

Die Reaktionszeit hängt unter anderem von der Temperatur, der verwendeten Menge und der Aktivität des Säure-, Basen- bzw. Enzymkatalysators und vom geforderten Umsatz ab sowie von der Struktur der Verbindung II. Bevorzugt wird die Reaktionszeit so angepasst, dass der Umsatz der Verbindung II mindestens 70 %, bevorzugt mindestens 80 %, besonders bevorzugt mindestens 90 %, ganz besonders bevorzugt mindestens 95 % und insbesondere mindestens 97 % beträgt. In der Regel sind dafür 1 bis 48 Stunden, bevorzugt 1 bis 12 Stunden und besonders bevorzugt 1 bis 6 Stunden ausreichend.

Die Enzym-katalysierte oder konventionell katalysierte Veresterung bzw. Umesterung erfolgt im Allgemeinen bei Temperaturen im Bereich von 0 bis 100 °C, bevorzugt 20 bis 80 °C und besonders bevorzugt 20 bis 70 °C.

Das molare Verhältnis von Verbindung II zu Verbindung III kann in einem weiten Bereich variiert werden. Vorzugsweise wird die Verbindung III im Überschuss bezogen auf die Stöchiometrie der Umsetzung eingesetzt. Im Allgemeinen liegt das molare Verhältnis von Verbindung II zu Verbindung III im Bereich von 1 : 100 bis 1 : 1, bevorzugt 1 : 50 bis 1 : 1, besonders bevorzugt 1 : 20 bis 1 : 1. Bevorzugt liegt die Verbindung der Formel III im Überschuss vor, so dass sie zusammen mit dem freiwerdenden Koppelprodukt, in der Regel ein Alkohol oder das bei einer Umesterung gebildete Ester-Koppelprodukt (wenn X-L' in Formel II für Alkylcarbonyloxy und Y-L in Formel III für Alkoxycarbonyl steht), unter vermindertem Druck, beispielsweise als Azeotrop, abdestilliert werden kann. Zusätzlich oder alternativ kann das freiwerdende Wasser bzw. der Alkohol bzw. der Ester z. B. mittels Molekularsiebs gebunden werden. Auf diese Weise wird das Reaktionsgleichgewicht zugunsten der Verbindung der Formel I verschoben.

Die Enzym-katalysierte sowie die konventionell katalysierte Veresterung bzw. Umesterung können in organischen Lösungsmitteln oder deren Gemischen oder ohne Zusatz von Lösungsmitteln durchgeführt werden. Die Ansätze sind in der Regel weitgehend wasserfrei (d. h. unter 10 Vol.-%, bevorzugt unter 5 Vol.-%, besonders bevorzugt unter 1 Vol.-% Wassergehalt).

Der Anteil organischer Lösungsmittel am Reaktionsgemisch kann beispielsweise 0,1 bis 50 Gew.-% betragen und liegt, sofern ein Lösungsmittel eingesetzt wird, bevorzugt im Bereich von 0,5 bis 30 Gew.-% oder im Bereich von 1 bis 10 Gew.-%. Vorzugsweise wird kein oder weniger als 1 Gew.-% organisches Lösungsmittel der Enzym- oder konventionell katalysierten Veresterung bzw. Umesterung zugesetzt.

Die Herstellung der Verbindung I kann in Gegenwart mindestens eines Polymerisationsinhibitors durchgeführt werden. Als Polymerisationsinhibitoren können beispielsweise 4-Methoxyphenol (MeHQ), Hydrochinon, 2,5-Di-tert.-butylhydrochinon, 2,6-Di-tert.-butyl-p-cresol, Nitrosoverbindungen wie isoacryl nitrate, Nitrosodiphenylamin, N-Nitrosocyclohexylhydroxylamin, Methylenblau, Phenothiazin oder Diphenylamin eingesetzt werden. Bevorzugt wird 4-Methoxyphenol (MeHQ) als Polymerisationsinhibitor eingesetzt.

Die Polymerisationsinhibitoren werden im Allgemeinen, bezogen auf die Menge der Verbindungen der Formel III, von 1 bis 10000 ppm, bevorzugt von 10 bis 5000 ppm, besonders bevorzugt von 30 bis 2500 ppm und insbesondere von 50 bis 1500 ppm eingesetzt.

Die Verbindungen der Formel III sind bekannt und in der Regel kommerziell erhältlich.

Die Herstellung der Verbindungen der Formel II kann in Analogie zu bekannten Verfahren zur Herstellung von Alkyliden-1,3-dioxolan-2-onen erfolgen, wie sie beispielsweise im eingangs zitierten Stand der Technik beschrieben werden. Bevorzugte Verbindungen der Formel II, worin R³ für Wasserstoff steht, können beispielsweise durch Umsetzung der Verbindung der Formel IV mit CO₂, vorzugsweise unter Einsatz eines Katalysators, hergestellt werden (siehe Schema 1):

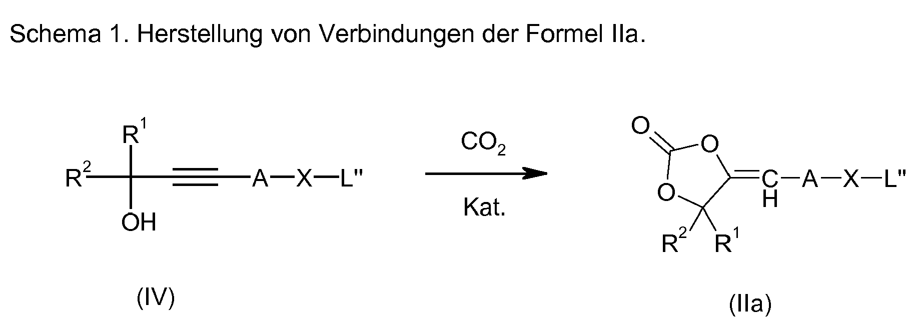

In Schema 1 haben R¹, R², A und X die zuvor genannten Bedeutungen. L" steht für eine Alkohol- oder Amino-Schutzgruppe und insbesondere für C₁-C₄-Alkylcarbonyl, speziell für Acetyl. X steht insbesondere für Sauerstoff. A steht insbesondere für C₁-C₄-Alkandiyl.

Als Katalysatoren kommen grundsätzlich Übergangsmetallkatalysatoren in Frage, die als aktives Metall beispielsweise Silber, Kupfer, Gold, Palladium oder Platin enthalten, z. B. Silbersalze wie Silberacetat, Silbercarbonat, Kupfer(II)-Salze wie Kupferacetat oder Kupfer(I)-Halogenide wie Cul, CuBr, CuCI, weiterhin Palladium(0)-Katalysatoren, wobei die vorgenannten Übergangsmetall-Verbindungen gegebenenfalls in Kombination mit einem organischen Amin, z. B. einem Tri-C₁-C₆-alkylamin wie Triethylamin oder einer Amidin-Base wie 1,5-Diazabicyclo[4.3.0]non-5-en (DBN) oder 1,8-Diazabicyclo[5.4.0]undec-7-en (DBU), oder mit einem organischen Phosphin, z. B. Trialkylphosphinen oder Triarylphosphinen wie Tributylphosphin und Triphenylphosphin, oder in Kombination mit einer Mischung aus einem der vorgenannten Phosphine mit einem Ammoniumsalz, wie beispielsweise Tri-C₁-C₆-alkylammoniumhalogeniden oder Tetra-C₁-C₆-alkylammoniumhalogeniden, eingesetzt werden können. Als Katalysatoren kommen weiterhin organische Phosphine als solche, z. B. Trialkylphosphine oder Triarylphosphine wie Tributylphosphin oder Triphenylphosphin, sowie sterisch gehinderte Carbene, z. B. 1,3-substituierte 2,3-Dihydroimidazol-2-yliden-Verbindungen wie 1,3-Diisopropyl-2,3-dihydro-4,5-imidazol-2-yliden oder deren CO₂-Addukte, sowie Kombinationen davon mit den vorgenannten Phosphinen in Betracht. Die Reaktion kann drucklos oder vorzugsweise unter erhöhtem Druck, z. B. bei 50 bis 500 bar, oder in überkritischem CO₂ durchgeführt werden. Bezüglich der Reaktionsbedingungen wird auf die zuvor genannte Literatur verwiesen.

Anstelle von CO₂ kann auch ein Carbonsäureanhydrid wie beispielsweise Bis-(tert.-butyl)dikohlensäureanhydrid (Boc₂O) eingesetzt werden. In diesem Fall erfolgt die Umsetzung üblicherweise in zwei Stufen, wobei man in der ersten Stufe die Verbindung IV mit einem Ester des Biskohlensäureanhydrids, z. B. mit Boc₂O, in Gegenwart einer Base, beispielsweise Natriumhydrid, umsetzt und den dabei erhaltenen Ester in Gegenwart eines Übergangsmetallkatalysators, z. B. eines goldhaltigen Katalysators, cyclisiert. Eine derartige Vorgehensweise ist beispielsweise in Org. Lett. 2006, 8, 515-518 beschrieben, auf die hiermit Bezug genommen wird.

In den erfindungsgemäß eingesetzten Beschichtungsmittelzusammensetzungen werden bevorzugt Verbindungen (B) eingesetzt, bei denen in der Formel (I') R¹ und R² jeweils für Wasserstoff oder C₁-C₆-Alkyl, insbesondere für Methyl stehen und/oder R³ für Wasserstoff steht. Ebenfalls bevorzugt werden Verbindungen (B) eingesetzt, bei denen in der Formel (I') A für Ethandiyl, X für O, Z für C=O und Y für eine chemische Bindung steht.

Bevorzugt ist die Verbindung (B) aus polymerisierten ethylenisch ungesättigten Verbindungen (M) aufgebaut, wobei die Verbindungen (M) wenigstens 10 Gew.-%, bezogen auf die Gesamtmenge der das Polymer bildenden ethylenisch ungesättigten Verbindungen, wenigstens einer Verbindung der Formel (I) 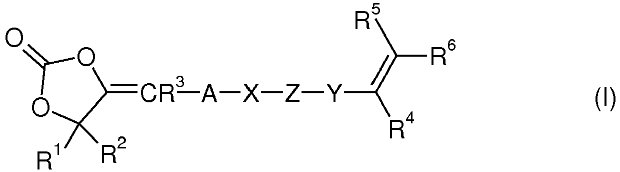 umfassen und
worin A, X, Y, Z, R¹, R² und R³ die in einem der vorhergehenden Ansprüche genannten Bedeutungen aufweisen und
- R⁴: für Wasserstoff, C₁-C₄-Alkyl, CH₂COOR⁸, Phenyl oder Phenyl-C₁-C₄-alkyl steht;
- R⁵, R⁶: unabhängig voneinander für Wasserstoff oder C₁-C₄-Alkyl stehen oder einer der Reste R⁵ oder R⁶ auch für COOR⁸ oder CH₂COOR⁸ stehen kann,
- R⁸: sofern vorhanden, für Wasserstoff oder C₁-C₆-Alkyl steht.

In einer besonders bevorzugten Ausführungsform der vorliegenden Erfindung ist die Verbindung (B) aus 10 bis 80 Gew.-%, bevorzugt 25 bis 70 Gew.-% und besonders bevorzugt 35 bis 65 Gew.-%, wenigstens einer Verbindung der Formel (I) und 20 bis 90 Gew.-%, bevorzugt 30 bis 75 Gew.-% und besonders bevorzugt 35 bis 65 Gew.-%, wenigstens eines monoethylenisch ungesättigten Comonomers (b) aufgebaut, wobei die Gew.-% Angaben jeweils bezogen sind auf das Gesamtgewicht aller Verbindungen (I) plus aller Comonomerer (b). Die Summe der Gewichtsanteile aller Verbindungen (I) plus aller Comonomerer (b) ergibt entsprechend stets 100 Gew.-%.

Die Verbindung (B) enthält bevorzugt mindestens zwei voneinander verschiedene, monoethylenisch ungesättigte Comonomere (b), besonders bevorzugt 2 bis 6 voneinander verschiedene, monoethylenisch ungesättigte Comonomere (b).

Besonders bevorzugt sind die Comonomere (b) ausgewählt aus der Gruppe der Ester monoethylenisch ungesättigter aliphatischer Monocarbonsäuren mit aliphatischen Alkanolen oder der Ester monoethylenisch ungesättigter aliphatischer Monocarbonsäuren mit cycloaliphatischen Alkanolen oder der vinylaromatischen Verbindungen oder Mischungen aus mindestens 2 dieser Comonomeren (b).

Ganz besonders bevorzugt sind die Comonomere (b) ausgewählt aus der Gruppe der Ester monoethylenisch ungesättigter C3-C6-Monocarbonsäuren mit C1-C8-Alkanolen oder der Ester monoethylenisch ungesättigter C3-C6-Monocarbonsäuren mit C5-C8-Cycloalkanolen oder der vinylaromatischen Verbindungen oder Mischungen aus mindestens 2 dieser Comonomeren (b).

Beispiele für als Comonomere (b) geeignete Ester monoethylenisch ungesättigter aliphatischer Monocarbonsäuren mit aliphatischen Alkanolen sind insbesondere die Ester der Acrylsäure und Methacrylsäure wie Methylacrylat, Ethylacrylat, n-Butylacrylat, 2-Butylacrylat, Isobutylacrylat, tert.-Butylacrylat und 2-Ethylhexylacrylat, Methylmethacrylat, Ethylmethacrylat, n-Butylmethacrylat, 2-Butylmethacrylat, Isobutylmethacrylat, tert.-Butylmethacrylat, 2-Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, sowie die entsprechenden Ester der Crotonsäure und Isocrotonsäure.

Beispiele für als Comonomere (b) geeignete Ester monoethylenisch ungesättigter Monocarbonsäuren mit cycloaliphatischen Alkanolen sind Ester der Acrylsäure und Methacrylsäure wie Cyclopentylacrylat, Cyclohexylacrylat, Cyclopentylmethacrylat, Cyclohexylmethacrylat, Isobornylacrylat, Isobornylmethacrylat sowie die entsprechenden Ester der Crotonsäure und Isocrotonsäure.

Beispiele für als Comonomere (b) geeignete vinylaromatischen Kohlenwasserstoffe sind Styrol, α-Methylstyrol und die Vinyltoluolisomere.

Es können als Comonomer (b) dabei also insbesondere
- Mischungen von mindestens zwei, bevorzugt 2 bis 6, verschiedenen Estern monoethylenisch ungesättigter aliphatischer Monocarbonsäuren mit aliphatischen Alkanolen oder
- Mischungen von mindestens zwei, bevorzugt 2 bis 6, verschiedenen Estern monoethylenisch ungesättigter aliphatischer Monocarbonsäuren mit cycloaliphatischen Alkanolen oder
- Mischungen von mindestens zwei, bevorzugt 2 bis 6, verschiedenen vinylaromatischen Kohlenwasserstoffen
eingesetzt werden.

Besonders bevorzugt eingesetzt werden
- Mischungen von mindestens zwei, bevorzugt 2 bis 6, verschiedenen Comonomeren aus mindestens einem Ester monoethylenisch ungesättigter C3-C6-Monocarbonsäuren mit C1-C8-Alkanolen mit mindestens einem vinylaromatischen Kohlenwasserstoff oder
- Mischungen von mindestens zwei, bevorzugt 2 bis 6, verschiedenen Comonomeren aus mindestens einem Ester monoethylenisch ungesättigter C3-C6-Monocarbonsäuren mit C1-C8-Alkanolen mit mindestens einem Ester monoethylenisch ungesättigter C3-C6-Monocarbonsäuren mit C5-C8-Cycloalkanolen oder
- Mischungen von mindestens zwei, bevorzugt 2 bis 6, verschiedenen Comonomeren aus mindestens einem Ester monoethylenisch ungesättigter C3-C6-Monocarbonsäuren mit C5-C8-Cycloalkanolen mit mindestens einem vinylaromatischen Kohlenwasserstoff oder
- Mischungen von 3 bis 6 verschiedenen Comonomeren aus mindestens einem Ester monoethylenisch ungesättigter C3-C6-Monocarbonsäuren mit C1-C8-Alkanolen mit mindestens einem Ester monoethylenisch ungesättigter C3-C6-Monocarbonsäuren mit C5-C8-Cycloalkanolen und mit mindestens einem vinylaromatischem Kohlenwasserstoff.

Ganz besonders bevorzugt wird eine Mischung aus einem vinylaromatischen Kohlenwasserstoff und 2 bis 4 verschiedenen Alkylestern von C1-C8-Alkanolen mit Acrylsäure und/oder mit Methacrylsäure eingesetzt.

Die erfindungsgemäß eingesetzten Verbindungen (B) weisen in der Regel ein zahlenmittleres Molekulargewicht im Bereich von 300 bis 100.000 Dalton, insbesondere im Bereich von 500 bis 15.000 Dalton, besonders bevorzugt von 900 bis 10.000 Dalton, und gewichtsmittlere Molekulargewichte zwischen 500 und 200.000 Dalton, bevorzugt 500 bis 20.000 Dalton, und besonders bevorzugt zwischen 1000 und 15000 Dalton, auf, jeweils gemessen mittels Gelpermeationschromatographie (GPC) gegen einen Polystyrolstandard.

Die Polymerisation der Monomere kann nach üblichen Verfahren der radikalischen Polymerisation durchgeführt werden. Hierzu zählen Lösungs- und Fällungspolymerisation, Suspensionspolymerisation und Emulsionspolymerisation, einschließlich einer Miniemulsionspolymerisation. Insbesondere erfolgt die Polymerisation mit der Lösungspolymerisation.

Geeignete Lösungs- oder Verdünnungsmittel sind insbesondere solche, in dem die zu polymerisierenden Monomere M löslich sind. Geeignete Lösungsmittel umfassen insbesondere aprotische Lösungsmittel. Hierzu zählen aliphatische und cycloaliphatische Kohlenwasserstoffe und Halogenkohlenwasserstoffe, aromatische Kohlenwasserstoffe und aromatische Halogenkohlenwasserstoffe, Alkylester und Cycloalkylester aliphatischer Monocarbonsäuren, N,N-Dialkylamide von aliphatischen Carbonsäuren, alicyclische und cyclische Ketone, Ether sowie Gemische der vorgenannten aprotischen Lösungsmittel.

In der Regel wird man das organische Lösungsmittel so bemessen, dass die Menge der zu polymerisierenden Monomere, bezogen auf die Gesamtmenge an Monomeren plus Lösungsmittel, im Bereich von 10 bis 65 Gew.-%, insbesondere im Bereich von 20 bis 60 Gew.-% liegt. Bei einer Lösungspolymerisation werden dementsprechend Polymerlösungen mit Feststoffgehalten im Bereich von 10 bis 90 Gew.-% und insbesondere 20 bis 80 Gew.-% erhalten.

Die Polymerisation der Monomere kann nach üblichen Verfahren der radikalischen Copolymerisation erfolgen. In der Regel wird man hierzu die Monomere unter Reaktionsbedingungen polymerisieren, bei denen sich Radikale bilden.

Die Bildung der Radikale erfolgt in der Regel durch Einsatz eines sogenannten Polymerisationsinitiators, d. h. einer Verbindung, die beim Zerfall, der chemisch, thermisch oder photochemisch ausgelöst werden kann, Radikale bildet.

Zu den geeigneten Polymerisationsinitiatoren zählen organische Azoverbindungen, organische Peroxide und Hydroperoxide, anorganische Peroxide und sogenannte Redoxinitiatoren.

Insbesondere hat es sich bewährt, einen geringen Teil der Monomere, z. B. 0,1 bis 20 Gew.-%, bezogen auf die Gesamtmenge der zu polymerisierenden Monomere, gegebenenfalls zusammen mit einer Teilmenge oder der Gesamtmenge an Polymerisationsinitiator und einem Teil oder der Gesamtmenge des Lösungs- bzw.

Verdünnungsmittels, im Polymerisationsgefäß vorzulegen, die Polymerisation zu starten, beispielsweise durch Erwärmen der Polymerisationsmischung, und dann die Restmenge der Monomere und, sofern erforderlich, die Restmenge an Polymerisationsinitiator und Lösungsmittel im Verlauf der Polymerisation zuzugeben.

Die für die Polymerisation üblicherweise angewendeten Polymerisationstemperaturen liegen, abhängig von dem gewählten Initiatorsystem, in der Regel im Bereich von 20 bis 200 °C, insbesondere im Bereich von 40 bis 180 °C und speziell im Bereich von 80 bis 160°C.

Der Polymerisationsdruck ist von untergeordneter Bedeutung und kann im Bereich von Normaldruck oder leichtem Unterdruck, z. B. > 800 mbar, oder bei Überdruck, z. B. bis 10 bar, liegen, wobei höhere oder niedrigere Drücke ebenfalls angewendet werden können.

Die Polymerisationsdauer wird in der Regel 10 Stunden nicht überschreiten und liegt häufig im Bereich von 1 bis 8 Stunden.

Bevorzugt werden erfindungsgemäß Beschichtungsmittelzusammensetzungen eingesetzt, die von 89,99 bis 30 Gew.-%, bevorzugt von 79,9 bis 40 Gew.-%, der Verbindung(en) (B), jeweils bezogen auf den Bindemittelanteils des Beschichtungsmittels [also bezogen auf das Gesamtgewicht des Bindemittelanteils der erfindungsgemäßen Verbindungen (B) mit funktionellen Gruppen der Formel I' plus des Bindemittelanteils des Polyols (A) plus des Bindemittelanteils der Komponente (C) plus Gewicht des Katalysators (D)], enthalten.

### Katalysator (D)

Die erfindungsgemäß eingesetzten Beschichtungsmittelzusammensetzungen enthalten mindestens einen Katalysator (D) für die Vernetzung. Die Katalysatoren werden insbesondere in Anteilen von 0,01 Gew.-% bis etwa 10 Gew.-%, bevorzugt 0,1 bis 5 Gew.-%, jeweils bezogen auf das Gesamtgewicht des Bindemittelanteils der erfindungsgemäßen Verbindungen (B) mit funktionellen Gruppen der Formel I' plus Bindemittelanteil des Polyols (A) plus Bindemittelanteil der Komponente (C) plus Gewicht des Katalysators (D), eingesetzt.

Bevorzugt ist der Katalysator (D) ein Amin und/oder ein Zink-Amidin-Komplex. Beispiele für geeignete Katalysatoren sind monomere und/oder oligomere Amine, insbesondere aliphatische und/oder cycloaliphatische und/oder aromatische und/oder araliphatische Amine, besonders bevorzugt cyclische und bicyclische Amine, wie beispielsweise 1,4-Diazabicyclo[2.2.2]octan, 4-(Dimethylamino)-pyridin, 1,5-Diazabicyclo[4,3,0]non-5-en, 1,8-Diazabicyclo[5.4.0]undec-7-en, 1,5,7-Triazabicyclo-[4.4.0]dec-5-en. Als Katalysator (D) geeignet sind ferner auch Amidine der Formel (DI) und deren Derivate, insbesondere Derivate auf Basis eines Zink-Amidin-Komplexes, der herstellbar ist durch Umsetzung von einem oder mehreren Zink(II)biscarboxylaten mit einem Amidin der Formel (DI) oder mit einer Mischung aus zwei oder mehreren Amidinen der Formel (DI) 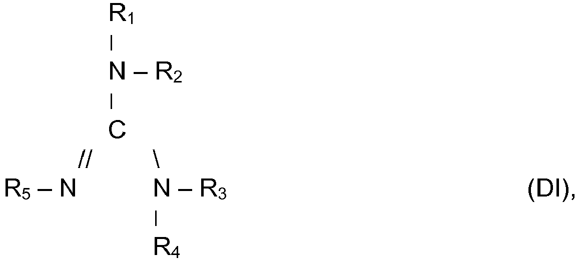 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind.

Derartige Amidine sowie deren Derivate sind beispielsweise in der WO2012/123166, der WO 2012/123161 und der WO 2012/123198 beschrieben. Ferner sind auch die in der WO 2012/126796 und der WO 2013/110712 genannten Imidazole und deren Derivate als Katalysatoren geeignet.

### Die Kombination der Komponenten (A), (B), ggf. (C), (D) sowie weitere Komponenten der Beschichtungsmittelzusammensetzungen

Bei den erfindungsgemäß besonders bevorzugt eingesetzten 2-komponentigen (2K) Beschichtungsmittelzusammensetzungen wird kurz vor der Applikation des Beschichtungsmittels eine Lackkomponente, enthaltend die polyhydroxylgruppenhaltige Verbindung (A) sowie weitere nachfolgend beschriebene Komponenten, mit einer weiteren Lackkomponente, enthaltend die carbonatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die polyhydroxylgruppenhaltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Die Gewichtsanteile des Polyols (A) und ggf. (C) und der Verbindungen (B) werden vorzugsweise solchermaßen gewählt, dass das molare Äquivalentverhältnis der Hydroxylgruppen der polyhydroxylgruppenhaltigen Verbindung (A) plus ggf. (C) zu den Carbonatgruppen (I') der Komponente (B) zwischen 1:0,5 und 1:1,5, bevorzugt zwischen 1:0,8 und 1:1,2 besonders bevorzugt zwischen 1:0,9 und 1:1,1, liegt.

Die polyhydroxylgruppenhaltigen Komponente (A), die Polyhydroxylkomponente (C) und/oder die Polycarbonat-Komponente (B) können in einem geeigneten Lösemittel vorliegen.

Als Lösemittel (L) für die erfindungsgemäß eingesetzten Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A), ggf. (C), und (B) reagieren. Beispiele für solche Lösemittel sind aliphatische und/oder aromatische Kohlenwasserstoffe wie Toluol,

Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Darüber hinaus kann die erfindungsgemäß eingesetzte Bindemittelmischung bzw. die erfindungsgemäß eingesetzte Beschichtungsmittelzusammensetzung mindestens ein übliches und bekanntes, von den Komponenten (A), (B), (C) und (D) verschiedenes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf das Gesamtgewicht des Bindemittelanteils der erfindungsgemäßen Verbindungen (B) plus Bindemittelanteil des Polyols (A) plus Bindemittelanteil der Komponente (C) plus Gewicht des Katalysators (D), enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind im erfindungsgemäßen Beschichtungsverfahren Beschichtungsmittelzusammensetzungen, die
20 bis 59,9 Gew.-%, bezogen auf den Bindemittelanteil der Beschichtungsmittelzusammensetzung, mindestens eines polyhydroxylgruppenhaltigen Polyacrylates (A) und/oder mindestens eines polyhydroxylgruppenhaltigen Polymethacrylates (A) und/oder mindestens eines polyhydroxylgruppenhaltigen Polyesterpolyols und/oder eines polyhydroxylgruppenhaltigen Polyurethans (A),
79,9 bis 40 Gew.-%, bezogen auf den Bindemittelanteil der Beschichtungsmittelzusammensetzung, mindestens einer Verbindung (B),
0 bis 10 Gew.-%, bezogen auf den Bindemittelanteil der Beschichtungsmittelzusammensetzung, der hydroxylgruppenhaltigen Komponente (C),
0,1 bis 5 Gew.-%, bezogen auf den Bindemittelanteil der erfindungsgemäßen Beschichtungsmittelzusammensetzung, mindestens eines Katalysators (D) für die Vernetzung,
0 bis 20 Gew.-%, bezogen auf den Bindemittelanteil der Beschichtungsmittelzusammensetzung, mindestens eines üblichen und bekannten Lackadditivs (F) enthalten, wobei die Summe aller Komponenten stets 100 Gew.-% ergibt.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B) bzw. (C) des Beschichtungsmittels wird analog dadurch bestimmt, dass eine kleine Probe (P) der jeweiligen Komponente (A) bzw. (B) bzw. (C) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

In einer weiteren Ausführungsform der Erfindung kann die erfindungsgemäß eingesetzte Bindemittelmischung bzw. die erfindungsgemäß eingesetzte Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer
solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung.

Da die aus den erfindungsgemäß eingesetzten Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäß eingesetzten Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäß eingesetzten Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäß eingesetzten Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäß eingesetzten Beschichtungsmittelzusammensetzungen können daher beispielsweise auf ein ggf. vorbeschichtetes Substrat aufgebracht werden, wobei die erfindungsgemäß eingesetzten Beschichtungsmittel sowohl pigmentiert als auch unpigmentiert sein können. Insbesondere werden die erfindungsgemäß eingesetzten Beschichtungsmittelzusammensetzungen und Lackierungen, insbesondere die Klarlackierungen, in dem technologisch und ästhetisch besonders anspruchsvollen Gebiet
der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Die erfindungsgemäß eingesetzten Beschichtungsmittelzusammensetzungen werden in mehrstufigen Beschichtungsverfahren eingesetzt, bei dem auf ein gegebenenfalls vorbeschichtetes Substrat zunächst eine pigmentierte Basislackschicht und danach eine Schicht mit der erfindungsgemäß eingesetzten Beschichtungsmittelzusammensetzung aufgetragen werden. Ge
genstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäß eingesetzten Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung werden Kunststoffanbauteile in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine transparente Klarlackschicht aus der erfindungsgemäß eingesetzten Beschichtungsmittelzusammensetzung aufgetragen werden.

### Beispiele

### Herstellung von 5-Methyl-hex-3-in-1,5-diol

Die Synthese erfolgte analog Bull. Acad. Sci. USSR 1965, 683.

In einem 8-L-Reaktor mit 3-stufigem 2-blättrigem, versetztem Scherblattrührer und Thermostat wurden bei 20 °C unter N₂-Atmosphäre 100,0 g (1,384 mol) 3-Butin-1-ol (Reinheit 97,0 %, Fa. Acros) in 3,92 L Toluol (Reinheit 99,9 %, Fa. BASF SE) gelöst und unter Rühren 320,0 g (4,848 mol) KOH (Reinheit 85,0 %, Fa. BASF SE) hinzugegeben. Innerhalb von 20 min wurde eine Mischung von 441,0 mL (6,00 mol) Aceton und 320,9 mL Toluol hinzugegeben. Zu dem Reaktionsansatz wurden langsam 3 L vollentsalztes Wasser gegeben, um den Feststoff vollständig zu lösen. Die Phasen wurden getrennt und die wässrige Phase wurde zweimal mit je 2 L Ethylacetat extrahiert. Das Lösungsmittel der vereinigten organischen Phasen wurde im Vakuum (50 °C, ca. 5 mbar) entfernt. Man erhielt 183,5 g des Produktes.

Die Identität des Produkts mit der Titelverbindung wurde gaschromatographisch überprüft (GC-Methode: ESMA6F, 30 m RTX-5-Amin 1 µm.32mm/80-0-R: 15 °C/min-250).

### Herstellung von Essigsäure-5-hydroxy-5-methyl-hex-3-inylester

100 g (0,78 mol) 5-Methyl-hex-3-in-1,5-diol wurden in 800 mL Dichlormethan gelöst und auf 0°C gekühlt. 113 mL (1,11 mol) Essigsäureanhydrid wurden in einer Portion hinzugegeben. 127 mL (1,25 mol) Triethylamin wurden auf 0-2°C gekühlt und innerhalb von 20 min hinzugegeben. Die Reaktionsmischung wurde 2 h bei 0 °C gerührt. Die Kühlung wurde entfernt und der Reaktionsansatz wurde 16 h bei 20°C gerührt. Die Mischung wurde auf 0°C gekühlt und 1200 mL einer 5%igen Salzsäurelösung hinzugegeben, wobei die Temperatur der Reaktionsmischung unter 5°C gehalten wurde. Der Ansatz wurde dreimal mit je 150 mL tert.-Butylmethylether (MTBE) extrahiert und die vereinigten organischen Phasen wurden viermal je ca. 1 h mit je 400 mL 5%iger wässriger Natriumhydrogencarbonatlösung gerührt, bis jeweils keine Gasentwicklung mehr zu beobachten war. Die organische Phase wurde mit 1 L vollentsalztem Wasser gewaschen, über Natriumsulfat getrocknet und das Lösungsmittel entfernt. Man erhielt 122,21 g (Ausbeute 92 %) einer klaren dunkelgelben Flüssigkeit. Die Reinheit wurde gaschromatographisch zu 99,5 % bestimmt.
1H-NMR (CDCl3, 500 MHz): 1,5 (s, 6H, C(CH3)2), 2,1 (s, 3H, C(O)CH3), 2,5 (t, 2H, CH2CH2O), 3,4 (bs, 1H, OH), 4.1 (t, 2H, CH2CH2O) ppm.

### Herstellung von 4,4-Dimethyl-5-(3-acetoxypropyliden)-1,3-dioxolan-2-on (exo-VC-OAc)

In einem 300-mL-Autoklaven wurden 50 g Essigsäure-5-hydroxy-5-methyl-hex-3-inylester in 74 mL Toluol vorgelegt. Hierzu gab man 0,9 g Silberacetat und 7,8 g 1,8-Diazabicyclo[5.4.0]undec-7-en (DBU). Der Reaktionsansatz wurde auf 70 °C erwärmt und ein CO₂-Druck von 50 bar wurde eingestellt. Nach 40 h entspannte man auf Normaldruck und wusch den Reaktionsansatz mit zweimal je 100 mL Wasser und mit 100 mL 5%iger Salzsäurelösung. Die vereinigten wässrigen Phasen wurden mit 100 mL Toluol extrahiert, und die vereinigten organischen Phasen wurden über Natriumcarbonat getrocknet. Das Lösungsmittel wurde entfernt, und der erhaltene Rückstand wurde aus 200 g Cyclohexan umkristallisiert. Man erhielt 35 g des Produktes der Titelverbindung (Reinheit > 99 %). Die Identität der Titelverbindung wurde gaschromatographisch überprüft (GC-Methode: 30m FFAP ID = 0,32 mm, FD = 0,25µm; 80°C 6K/min bis 250°C Temp. Halten; Retentionszeit: 20,6min).
¹H-NMR (CDCl₃, 500 MHz): 1,5 (s, 6H, C(CH₃)2), 2,1 (s, 3H, C(O)CH₃), 2,5 (t, 2H, CH₂CH₂O), 3,4 (bs, 1H, OH), 4,1 (t, 2H, CH₂CH₂O) ppm.

### Herstellung von [(3Z)-3-(5,5-Dimethyl-2-oxo-1,3-dioxolan-4-yliden)propyl]acrylat (exo-VCA)

280 g (1,31 mol) [(3Z)-3-(5,5-Dimethyl-2-oxo-1,3-dioxolan-4-yliden)propyl]acetat (exo-VC-OAc), 1307 g (13,1 mol) Ethylacrylat, 0,28 g 4-Methoxyphenol (MeHQ) und 84 g (30 Gew.-%) Novozym® 435 der Fa. Novozymes wurden zusammengegeben. Der Ansatz wurde 24 h bei 40 °C gerührt. Der Ansatz wurde filtriert, mit Aceton nachgewaschen, und das Lösungsmittel wurde bei 40 °C am Rotationsverdampfer entfernt. Man erhielt 276,7 g des Produktes der Titelverbindung mit einer Reinheit von 92,4 % (GC-Analyse).
1H-NMR (CDCl3, 400 MHz): 1,6 (s, 6H), 2,5 (q, 2H), 4,2 (t, 2H), 4,7 (t, 1H), 5,84-5,87 (dd, 1H), 6,09-6,16 (dd, 1H), 6,37-6,42 (dd, 1H) ppm.

### Herstellung eines Copolymerisates mit exo-VCA (Komponente (B1))

In einem mittels Ölbad geheiztem Glaskolben ausgestattet mit Rührer, Thermometer und 2 Zulaufgefäßen wurden 100 g Butylacetat 98/100 vorgelegt. Für die Monomerenmischung wurden 20 g n-Butylacrylat, 20 g n-Butylmethacrylat, 30 g Methylmethacrylat, 50 g Styrol und 80 g exo-VCA in einem der Zulaufgefäße vorgelegt. (Endfeststoffgehalt: 50 %). Die Mischung wurde im Stickstoffstrom und unter Rühren auf 125 °C erhitzt. In einem weiteren Zulaufgefäß wird eine Lösung von 12 g TBPEH (=tertiär Butyl-per-2-ethylhexanoat, Fa Pergan, Bocholt oder United Initiators, Pullach) vorgelegt. Nach Erreichen von 125°C startet man den Intiatorvorlauf so, daß eine Gesamtlaufzeit von 220 Minuten gegeben ist. 10 Minuten nach dem Intiatorvorlauf startet man die Monomermischung mit einer Gesamtzulaufzeit von 180 Minuten. (= Ini-Nachlauf von 30 Minuten). Nach Beendigung aller Zuläufe hält man das Reaktionsgemisch für weitere 180 Minuten bei dieser Temperatur, kühlt dann ab.

Die Viskosität der so erhaltenen Mischung, (gemessen mittels Mischung mit einem Rotationsviskosimeter Brookfield CAP 2000, Spindel 3, 1000RPM) wird mit 39 mPa*s gefunden, der Feststoffgehalt (1h 130°C) liegt bei 44 % ± 1%, die Säurezahl beträgt 1,4 mgKOH/g Festharz und das Equivalentgewicht liegt bei 555g. Das zahlenmittlere Molekulargewicht beträgt 3025 Dalton, das gewichtsmittlere Molekulargewicht 8315 Dalton, jeweils bestimmt mittels Gelpermeationschromatographie mit dem Gerät Agilent 1100 Series bei 35°C mit einer Hochdruckflüssigkeitschromatographie-Pumpe und dem Brechungsindexdetektor Agilent RIGI 1362A + UV G 1314A gegen einen Polystyrolstandard.

### Herstellung der hydroxylgruppenhaltigen Polymeren (A1) bis (A7)

### Polyester A1

In einem mit einem Rührer, Rückflußkühler und Wasserabscheider versehenen 3,5 l Reaktor werden 374,7 g Tris(2-hydroxyethyl)isocyanurat, 165,7 g Hexahydrophthalsäureanhydrid und 107,6 g Xylol zusammengegeben und auf 100 °C aufgeheizt. Nach Auftreten einer exothermen Reaktion wird das Reaktionsgemisch auf 136 °C erhitzt und nach Erreichen dieser Temperatur anschließend wieder auf 82 °C abgekühlt. Dann werden 477,8 g Phthalsäureanhydrid hinzugefügt und das Reaktionsgemisch erneut auf 100 °C erhitzt. Nach Auftreten einer exothermen Reaktion wird die Temperatur auf 145 °C erhöht, 10 Minuten gehalten und anschließend auf 140 °C gesenkt. Anschließend werden 981,4 g Cardura®E10 (handelsüblicher Glycidester der Versaticsäure der Firma Momentive) hinzugegeben. Nach Durchlaufen einer weiteren exothermen Reaktion wird die Temperatur für 2,5 h bei 145 °C gehalten. Danach wird das Reaktionsgemisch auf 80 °C abgekühlt und mit 392,8 g Butylacetat versetzt.

### Polyester A2

In einem mit einem Rührer, Rückflußkühler und Wasserabscheider versehenen 3,5 l Reaktor werden 374,7 g Tris(2-hydroxyethyl)isocyanurat, 165,7 g Hexahydrophthalsäureanhydrid und 107,6 g Xylol zusammengegeben und auf 100 °C aufgeheizt. Nach Auftreten einer exothermen Reaktion wird das Reaktionsgemisch auf 136 °C erhitzt nach Erreichen dieser Temperatur und anschließend wieder auf 82 °C abgekühlt. Dann werden 477,8 g Phthalsäureanhydrid hinzugefügt und das Reaktionsgemisch erneut auf 100 °C erhitzt. Nach Auftreten einer exothermen Reaktion wird die Temperatur auf 145 °C erhöht, 10 Minuten gehalten und anschließend auf 140 °C gesenkt. Anschließend werden 1076,4 g Cardura®E10 (handelsüblicher Glycidester der Versaticsäure der Firma Momentive) hinzugegeben. Nach Durchlaufen einer weiteren exothermen Reaktion wird die Temperatur für 2,5 h bei 145 °C gehalten. Danach wird Reaktionsgemisch auf 80 °C und mit 392,8 g Butylacetat versetzt.

### Polyester A3

In einem mit einem Rührer, Rückflußkühler und Wasserabscheider versehenen 3,5 l Reaktor werden 136,2 g Penta-R (handelsübliches Pentaerythrit der Firma BASF S.E.), 154 g Hexahydrophthalsäureanhydrid, 33,1 g Solventnaphta® und 130,3 g Xylol zusammengegeben und auf 100 °C aufgeheizt. Nach Auftreten einer exothermen Reaktion wird das Reaktionsgemisch auf 136 °C erhitzt und anschließend auf 82 °C abgekühlt. Dann wird eine Lösung von 462 g Hexahydrophthalsäureanhydrid in 22,9 g Solventnaphtha® hinzugefügt und das Reaktionsgemisch erneut auf 100 °C erhitzt. Nach Auftreten einer exothermen Reaktion wird die Temperatur auf 145 °C erhöht, 10 Minuten gehalten und anschließend auf 140 °C gesenkt. Anschließend wird eine Lösung von 913 g Cardura®E10 in 25,6 g Solventnaptha® hinzugegeben. Nach Durchlaufen einer weiteren exothermen Reaktion wird die Temperatur für 2,5 h bei 145 °C gehalten. Danach wird Reaktionsgemisch auf 120 °C abgekühlt und mit 60,1 g Solventnaptha® und 60,1 g Xylol versetzt. Das Reaktionsgemisch wird auf 60 °C abgekühlt und mit weiteren 20 g Solventnaptha® versetzt.

### Polyester A4

In einem mit einem Rührer, Rückflußkühler und Wasserabscheider versehenen 3,5 l Reaktor werden 378,3 g Tris(2-hydroxyethyl)isocyanurat, 154 g Hexahydrophthalsäureanhydrid und 100 g Xylol zusammengegeben und auf 100 °C aufgeheizt. Nach Auftreten einer exothermen Reaktion wird das Reaktionsgemisch auf 136 °C erhitzt und anschließend auf 82 °C abgekühlt. Dann werden 444 g Phthalsäureanhydrid hinzugefügt und das Reaktionsgemisch erneut auf 100 °C erhitzt. Nach Auftreten einer exothermen Reaktion wird die Temperatur auf 145 °C erhöht, 10 Minuten gehalten und anschließend auf 140 °C gesenkt. Anschließend werden 1140 g Cardura®E10 (handelsüblicher Glycidester der Versaticsäure der Firma Momentive) hinzugegeben. Nach Durchlaufen einer weiteren exothermen Reaktion wird die Temperatur für 2,5 h bei 145 °C gehalten. Danach wird das Reaktionsgemisch auf 80 °C abgekühlt und mit 421,5 g Butylacetat versetzt.

**Tabelle 1: Kennzahlen der hydroxylgruppenhaltigen Polyester (A1) bis (A4)**

| | (A1) | (A2) | (A3) | (A4) |
|---|---|---|---|---|
| FK (%) | 79,9 | 79,1 | 81,0 | 73,3 |
| OHZ (mgKOH/g) | 134 | 130 | 141 | 125 |
| SZ (mgKOH/g) | 21 | 0 | 14 | 0 |
| Mn | 997 | 990 | 1262 | 907 |
| Mw | 1280 | 1315 | 1516 | 1302 |
| Mw/Mn | 1,3 | 1,3 | 1,2 | 1,4 |

Erläuterungen zu Tabelle 1:
FK (%) = Festkörpergehalt in %, gemessen durch Verdampfen Lösemittel 1h bei 130°C
OHZ (mg KOH/g) = OH-Zahl in mg KOH/g, ermittelt durch Titration
SZ (mg KOH/g) = Säurezahl in mg KOH/g, ermittelt durch Titration
Mn, Mw = zahlenmittleres bzw. gewichtsmittleres Molekulargewicht, bestimmt mittels Gelpermeationschromatographie mit dem Gerät Agilent 1100 Series bei 35°C mit einer Hochdruckflüssigkeitschromatographie-Pumpe und dem Brechungsindexdetektor Agilent RIGI 1362A + UV G 1314A gegen einen Polystyrolstandard

### Polyacrylate A5 und A6

Zur Herstellung des Polyacrylats (A5) wird in einem, mittels Ölumlaufthermostat beheizbaren, doppelwandigen 4-l Edelstahlkessel, ausgestattet mit Thermometer, Ankerrührer, 2 Tropftrichtern und Rückflusskühler Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 2 angegebenen Bindemittelgehalt eingestellt.

Zur Herstellung des Acrylats A6 wird das Acrylat A5 zusammen mit der in Tabelle 2 angegebenen Menge Cardura® E10 in einem mittels Ölumlaufthermostat beheizbaren, doppelwandigem 2-l Edelstahlkessel ausgestattet mit Thermometer und Ankerrührer auf 145°C erhitzt. Sobald die Säurezahl auf <0,5 gefallen ist wird die Mischung auf Raumtemperatur abgekühlt.

**Tabelle 2: Zusammensetzung in Gewichtsteilen und Kennzahlen der hydroxylgruppenhaltigen Polyacrylate (A5) und (A6)**

| | (A5) | (A6) |
|---|---|---|
| Styrol | 20 | 20 |
| n-Butylmethacrylat | 15 | 15 |
| Hydroxypropylmethacrylat | 20 | 20 |
| Cyclohexylmethacrylat | 26 | 26 |
| Hydroxyethylmethacrylat | 18 | 18 |
| Acrylsäure | 1 | 1 |
| Cardura®E10 | ---- | 5,36 |
| TBPEH | 12 | 12 |
| Solventnaphta® 160/180 | 100 | 100 |
| Festkörper (%) | 60 | 64,5 |
| OH-Zahl (mgKOH/g) | 156 | 148 |
| Säurezahl (mgKOH/g) | 9 | <0,5 |
| Mn | 1600-2200 | 1338 |
| Mw | 3900-4500 | 4010 |
| Mw/Mn | 2,2 | 3,0 |

Erläuterungen zu Tabelle 2:
Cardura®E10 = handelsüblicher Glycidester der Versaticsäure der Firma Momentive
TBPEH = tertiär Butyl-per-2-ethylhexanoat, Fa Pergan, Bocholt oder United Initiators, Pullach
FK (%) = Festkörpergehalt in %, gemessen durch Verdampfen Lösemittel 1h bei 130°C
OHZ (mgKOH/g) = OH-Zahl in mgKOH/g, ermittelt durch Titration
SZ (mgKOH/g) = Säurezahl in mgKOH/g, ermittelt durch Titration
Mn, Mw = zahlenmittleres bzw. gewichtsmittleres Molekulargewicht, gemessen mittels Gelpermeationschromatographie (GPC) gegen einen Polystyrolstandard

### Polyurethan A7

Zunächst wird ein hydroxylgruppenhaltiger Polyester analog US6,946,515, Herstellungsbeispiel 5 folgendermaßen hergestellt:
In einen Stahlreaktor werden 308 Teile Hexahydrophthalsäureanhydrid und 134 Teile Trimethylolpropan gegeben und auf 150 °C erhitzt. Anschließend werden 457 Teile Cardura® E10 über eine Stunde zu dosiert. Die Temperatur wird bei 150 °C gehalten bis eine Säurezahl < 3 mg KOH/g erreicht wird. Durch die Zugabe von Butylglykolacetat wird der erhaltene Polyester bei 120 °C auf einen Festkörpergehalt von 83,0 % eingestellt. Der Polyester weist eine OH-Zahl von 185 mgKOH/g und eine Säurezahl von < 3 mgKOH/g auf, jeweils ermittelt durch Titration.

In einem mit einem Rührer und Rückflusskühler versehenen 3,5 l Reaktor werden 1198,1 g Polyester aus obigem Beispiel, 24,2 g Neopentylglykol, 155,0 g Isophorondiisocyanat, 35,9 g Trimethylolpropan und 778,8 g Methylethylketon zusammengegeben und auf 85 °C aufgeheizt. Die Temperatur wird gehalten bis der Anteil an NCO-Gruppen auf 1,6 % gesunken ist. Zur Kettenverlängerung wird dann Trimethylolpropan zugesetzt, bis der NCO-Gehalt auf 0 % gefallen ist. Die Bestimmung des NCO-Gehaltes erfolgt dabei gemäß DIN EN ISO 11909. Anschließend stellt man das Reaktionsgemisch durch Zugabe von weiterem Methylethylketon auf einen Festkörper von 54,5 % ein.

**Tabelle 3: Kennzahlen des polyhydroxylgruppenhaltigen Polyurethans (A7)**

| FK (%) | 54,5 |
|---|---|
| OHZ (mgKOH/g) | 190 |
| SZ (mgKOH/g) | 3,4 |
| Mn | 830 |
| Mw | 2109 |
| Mw/Mn | 2,5 |

Erläuterungen zu Tabelle 3:
FK (%) = Festkörpergehalt in %, gemessen durch Verdampfen Lösemittel 1h bei 130°C
OHZ (mg KOH/g) = OH-Zahl in mg KOH/g, ermittelt durch Titration
SZ (mg KOH/g) = Säurezahl in mg KOH/g, ermittelt durch Titration
Mn, Mw = zahlenmittleres bzw. gewichtsmittleres Molekulargewicht, bestimmt mittels Gelpermeationschromatographie gegen einen Polystyrolstandard

### Beispiele 1 bis 10

### Klarlackzusammensetzungen

Mit den in Tabelle 4 genannten hydroxylgruppenhaltigen Polymeren (A1) bis (A7) wurde gemäß den nachfolgenden Einwaagen die jeweils erste Komponente eines 2-Komponenten-Klarlacks hergestellt: Zur Herstellung von Zweikomponenten-Klarlack-Beschichtungen werden die gemäß obigen Angaben hergestellten jeweils ersten Komponenten mit den in Tabelle 4 genannten Einwaagen der zweiten Komponente (B1) homogenisiert und direkt danach auf ihren Onset hin mittels DMA untersucht.

**Tabelle 4: Zusammensetzung der Klarlackzusammensetzungen in Gewichtsteilen sowie gemessene Onset-Temperaturen**

| | Beisp. 1 | Beisp. 2 | Beisp. 3 | Beisp. 4 | Beisp. 5 | Beisp. 6 | Beisp. 7 |
|---|---|---|---|---|---|---|---|
| (A1) | | | | | 25,74 | | |
| (A2) | | | | | | 26,45 | |
| (A3) | | | 24,63 | | | | |
| (A4) | | | | 29,37 | | | |
| (A5) | 31,32 | | | | | | |
| (A6) | | 28,65 | | | | | |
| (A7) | | | | | | | 30,34 |
| DBU | 0,50 | 0,55 | 0,49 | 0,50 | 0,49 | 0,50 | 0,50 |
| Butylacetat | 6,81 | 8,92 | 15,76 | 14,04 | 15,85 | 15,91 | 3,23 |
| Exo VC-Acrylat (B1) | 61,38 | 61,89 | 59,11 | 56,09 | 57,92 | 57,14 | 65,93 |

| Summe | 100,00 | 100,00 | 100,00 | 100,00 | 100,00 | 100,00 | 100,00 |
|---|---|---|---|---|---|---|---|
| Säurezahl A1-A6 (mgKOH/g) | 8-10 | <0,5 | 14 | 0 | 21,2 | 0,4 | 3,4 |
| Onset (°C) | 114 | 40 | 136 | 42 | 131 | 44 | 53 |

Überraschenderweise wurde gefunden, dass die erfindungsgemäß eingesetzten Carbonatgruppenhaltigen Verbindungen (B) eine so hohe Reaktivität der Carbonatgruppe aufweisen, dass sie auch mit den im Vergleich zu Aminogruppen weniger reaktiven Hydroxylgruppen problemlos vernetzt werden können.

Die Ergebnisse in Tabelle 4 zeigen ferner deutlich, dass mit abnehmender Säurezahl des hydroxylgruppenhaltigen Polymers (A) die Onset-Temperatur sinkt. Insbesondere wenn die Säurezahl bei maximal 10 mgKOH/g liegt, wird eine deutliche Absenkung der Onset-Temperatur beobachtet. Für Klarlackzusammensetzungen, die bei möglichst niedrigen Einbrenntemperaturen vernetzt werden sollen, sollte die Säurezahl des hydroxylgruppenhaltigen Polymers besonders bevorzugt zwischen 0 und 5 mgKOH/g, wie Beispiel 7 zeigt, und ganz besonders bevorzugt bei weniger als 1 mg KOH/g liegen, wie die Beispiele 2, 4, und 6 zeigen.

Ferner wurde mit dem hydroxylgruppenhaltigen Polyester (A2) sowie dem carbonatgruppenhaltigen Polyacrylat (B1) erneut eine Klarlackzusammensetzung formuliert und und mit einem Kastenrakel auf Stahlbleche appliziert (100µm Schichtdicke Nassfilm), die zuvor mit einer handelsüblichen eingebrannten KTL, mit einem handelsüblichen konventionellen eingebrannten Füller und mit einem schwarzen Wasserbasislack, der 20 Minuten bei 140°C eingebrannt wurde, beschichtet sind. Die Klarlacke wurden anschließend 30 min bei 80°C bzw. 100°C bzw. 140°C gehärtet. Die Prüfergebnisse der resultierenden Beschichtungen sind in Tabelle 5 dargestellt.

**Tabelle 5: Zusammensetzung der Klarlackzusammensetzungen in Gewichtsteilen sowie Prüfergebnisse der Beschichtungen**

| Beispiel | 8 | 9 | 10 |
|---|---|---|---|
| Härtung Klarlack bei | 80°C | 100°C | 140°C |
| Carbonat (B1) (Exo VC-Acrylat) | 11.10 | 11.10 | 11.10 |
| (A2) | 5.00 | 5.00 | 5.00 |
| DBU | 1.90 | 1.90 | 1.90 |
| Butylacetat 98/100 | 1.40 | 1.40 | 1.40 |
| nicht flüchtiger Anteil (theoretisch) | 50 | 50 | 50 |
| Verhältnis Exo VC:OH | 0.9:1 | 0.9:1 | 0.9:1 |
| Bemerkung zum Lack | klar | klar | klar |
| Kastenrakel (Nassschichtdicke in µm) | 100 | 100 | 100 |
| Objektzeit [min] | 30 | 30 | 30 |
| Objekttemperatur [°C] | 80 | 100 | 140 |
| Bemerkung / Aussehen nach 1h | klar, trocken | klar, trocken | klar, trocken |
| MEK - Test (nach 1d Lagerung bei 25°C) | >200 | >200 | >200 |
| Universalhärte bei 25,6 mN [N/mm²] | 45 | 60 | 53 |

Erläuterungen zu Tabelle 5:
Die Mikroeindringhärte wird entsprechend der DIN EN ISO 14577-4 bestimmt.
Beim MEK-Test wird ein mit MEK getränkter Lappen an einem 1kg schweren Hammer befestigt und in Doppelhüben über den Lack geführt. Es wird visuell beurteilt nach wievielen Doppelhüben eine Ablösung des Lackes erfolgt.

Diskussion der Prüfergebnisse:
Die Ergebnisse in Tabelle 5 zeigen, dass die mit den erfindungsgemäßen Klarlackzusammensetzungen erhaltenen Beschichtungen eine gute Härte und MEK-Beständigkeit zeigen, die auch bei niedrigen Einbrenntemperaturen nicht einbricht.

## Patentansprüche

1. Mehrstufiges Beschichtungsverfahren, bei dem auf ein gegebenenfalls vorbeschichtetes Substrat eine pigmentierte Basislackschicht und danach eine Schicht aus einer nichtwässrigen Beschichtungsmittelzusammensetzung enthaltend
(A) mindestens eine oligomere und/oder polymere Verbindung (A) mit mindestens zwei Hydroxylgruppen,
(B) mindestens eine oligomere und/oder polymere Verbindung (B) mit mindestens zwei Alkyliden-1,3-dioxolan-2-on-Gruppen sowie
(D) mindestens einen Katalysator für die Vernetzung, aufgebracht wird, **dadurch gekennzeichnet, dass** die Verbindung (B) mindestens zwei Alkyliden-1,3-dioxolan-2-on-Gruppen der Formel (I') 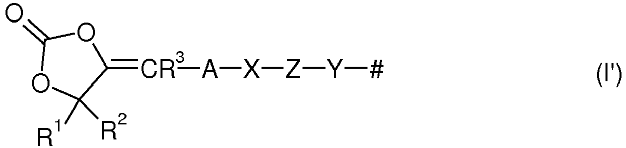 wobei # für die Anbindung an das Polymerrückgrat steht und
R¹, R² unabhängig voneinander für Wasserstoff, C₁-C₆-Al-kyl, C₁-C₄-Alkoxy-C₁-C₄-alkyl, C₅-C₆-Cycloalkyl, Phenyl oder Phenyl-C₁-C₄-alkyl stehen;
R³ für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
A für eine chemische Bindung oder C₁-C₄-Alkandiyl steht, wobei A insbesondere für C₁-C₄-Alkandiyl steht;
X für O oder NR⁷ steht;
Z für eine chemische Bindung, PO₂, SO₂ oder C=O steht, wobei Z insbesondere für C=O steht;
Y für eine chemische Bindung, CH₂ oder CHCH₃ steht, wobei Y insbesondere für eine chemische Bindung steht;
R⁷ sofern vorhanden, für C₁-C₆-Alkyl steht;
enthält.

2. Beschichtungsverfahren nach Anspruch 1, **dadurch gekennzeichnet, dass** R¹ und R² jeweils für Wasserstoff oder C₁-C₆-Alkyl, insbesondere für Methyl oder Ethyl stehen und/oder dass R³ für Wasserstoff steht.

3. Beschichtungsverfahren nach Anspruch 1 oder 2, **dadurch gekennzeichnet, dass** A für Ethandiyl, X für O, Z für C=O und Y für eine chemische Bindung steht.

4. Beschichtungsverfahren nach einem der Ansprüche 1 bis 3, **dadurch gekennzeichnet, dass** die Verbindung (B) aus polymerisierten ethylenisch ungesättigten Verbindungen (M) aufgebaut ist, wobei die Verbindungen (M) wenigstens 10 Gew.-%, bezogen auf die Gesamtmenge der das Polymer bildenden ethylenisch ungesättigten Verbindungen, wenigstens einer Verbindung der Formel I 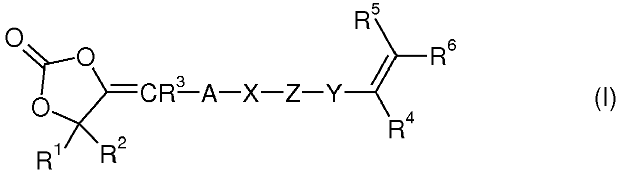 umfassen und worin A, X, Y, Z, R¹, R² und R³ die in einem der vorhergehenden Ansprüche genannten Bedeutungen aufweisen und
R⁴ für Wasserstoff, C₁-C₄-Alkyl, CH₂COOR⁸, Phenyl oder Phenyl-C₁-C₄-alkyl steht;
R⁵, R⁶ unabhängig voneinander für Wasserstoff oder C₁-C₄-Alkyl stehen oder einer der Reste R⁵ oder R⁶ auch für COOR⁸ oder CH₂COOR⁸ stehen kann,
R⁸ sofern vorhanden, für Wasserstoff oder C₁-C₆-Alkyl steht.

5. Beschichtungsverfahren nach einem der Ansprüche 1 bis 4, **dadurch gekennzeichnet, dass** die Verbindung (B) aus 10 bis 80 Gew.-%, bevorzugt 25 bis 70 Gew.-% und besonders bevorzugt 35 bis 65 Gew.-%, wenigstens einer Verbindung der Formel I und 20 bis 90 Gew.-%, bevorzugt 30 bis 75 Gew.-% und besonders bevorzugt 35 bis 65 Gew.-%, wenigstens eines monoethylenisch ungesättigten Comonomers (b) aufgebaut ist, wobei die Gew.-% Angaben jeweils bezogen sind auf das Gesamtgewicht aller Verbindungen (I) plus aller Comonomerer (b).

6. Beschichtungsverfahren nach einem der Ansprüche 1 bis 5, **dadurch gekennzeichnet, dass** die Verbindung (B) mindestens zwei voneinander verschiedene, monoethylenisch ungesättigte Comonomere (b), bevorzugt 2 bis 6 voneinander verschiedene, monoethylenisch ungesättigte Comonomere (b), enthält.

7. Beschichtungsverfahren nach einem der Ansprüche 1 bis 6, **dadurch gekennzeichnet, dass** die Comonomere ausgewählt sind aus der Gruppe der Ester monoethylenisch ungesättigter aliphatischer Monocarbonsäuren mit aliphatischen Alkanolen oder der Ester monoethylenisch ungesättigter aliphatischer Monocarbonsäuren mit cycloaliphatischen Alkanolen oder der vinylaromatischen Kohlenwasserstoffe oder Mischungen aus mindestens 2 dieser Comonomeren (b).

8. Beschichtungsverfahren nach einem der Ansprüche 1 bis 7, **dadurch gekennzeichnet, dass** die Polyole (A) eine OH-Zahl von 30 bis 400 mg KOH/g, insbesondere zwischen 70 und 300 mg KOH/g, aufweisen.

9. Beschichtungsverfahren nach einem der Ansprüche 1 bis 8, **dadurch gekennzeichnet, dass** die Polyole (A) eine Säurezahl zwischen 0 und 10 mg KOH/g, bevorzugt zwischen 0 und 5 mg KOH/g und ganz besonders bevorzugt von weniger als 1 mg KOH/g aufweisen.

10. Beschichtungsverfahren nach einem der Ansprüche 1 bis 9, **dadurch gekennzeichnet, dass** die Polyole (A) Polyesterpolyole, Polyurethanpolyole, Polysiloxanpolyole, Polyacrylatpolyole, Polymethacrylatpolyole oder Mischungen dieser Polyole, insbesondere Polyesterpolyole, Polyacrylatpolyole, Polymethacrylatpolyole oder Mischungen von Polyesterpolyolen und Poly(meth)acrylatpolyolen, sind.

11. Beschichtungsverfahren nach einem der Ansprüche 1 bis 10, **dadurch gekennzeichnet, dass** das Beschichtungsmittel
i. 10 bis 69,99 Gew.-%, bevorzugt von 20 bis 59,9 Gew.-%, mindestens eines polyhydroxylgruppenhaltigen Polyesters (A) oder mindestens eines polyhydroxylgruppenhaltigen Poly(meth)acrylates (A) oder mindestens eines polyhydroxylgruppenhaltigen Polyurethans (A) oder einer Mischung mindestens eines polyhydroxylgruppenhaltigen Polyesters (A) und/oder mindestens eines polyhydroxylgruppenhaltigen Poly(meth)acrylates (A) und/oder mindestens eines polyhydroxylgruppenhaltigen Polyurethans,
ii. 89,99 bis 30 Gew.-%, bevorzugt von 79,9 bis 40 Gew.-%, mindestens einer Verbindung (B),
iii. 0 bis 20 Gew.-%, bevorzugt von 0 bis 10 Gew.-%, mindestens einer Verbindung (C) und
iv. 0,01 bis 10 Gew.-% mindestens eines Katalysators (D) enthält, wobei die Gew.-% Angaben jeweils bezogen sind auf den Bindemittelanteil des Beschichtungsmittels und die Summe aller Komponenten (A), (B), ggf. (C) und (D) jeweils 100 Gew.-% ergibt.

12. Beschichtungsverfahren nach einem der Ansprüche 1 bis 11, **dadurch gekennzeichnet, dass** der Katalysator (D) ein Amin und/oder ein Zink-Amidin-Komplex ist.

13. Beschichtungsverfahren nach einem der Ansprüche 1 bis 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 12 bei Temperaturen von 20 bis 200°C während einer Zeit von einer Minute bis zu 10 Stunden gehärtet wird.

14. Verwendung des Verfahrens nach einem der Ansprüche 1 bis 13 für die Automobilserienlackierung, die Lackierung von Automobil-Anbauteilen und/oder Nutzfahrzeugen und die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** sie nach einem Verfahren nach einem der Ansprüche 1 bis 13 hergestellt worden ist.

## Claims

1. Multistage coating method which comprises applying, to an optionally precoated substrate, a pigmented basecoat film and thereafter a film of a nonaqueous coating material composition comprising
(A) at least one oligomeric and/or polymeric compound (A) having at least two hydroxyl groups,
(B) at least one oligomeric and/or polymeric compound (B) having at least two alkylidene-1,3-dioxolan-2-one groups, and
(D) at least one catalyst for the crosslinking,
**characterized in that**
the compound (B) contains at least two alkyliden-1,3-dioxolan-2-one groups of the formula (I') 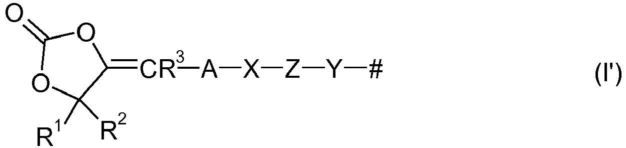 where # stands for the attachment to the polymer backbone and
R¹, R² independently of one another are hydrogen, C₁-C₆ alkyl, C₁-C₄ alkoxy-C₁-C₄ alkyl, C₅-C₆ cycloalkyl, phenyl or phenyl-C₁-C₄ alkyl;
R³ is hydrogen, C₁-C₆ alkyl, C₁-C₄ alkoxy-C₁-C₄ alkyl, C₅-C₆ cycloalkyl, phenyl, or phenyl-C₁-C₄ alkyl, R³ more particularly being hydrogen;
A is a chemical bond or C₁-C₄ alkanediyl, A more particularly being C₁-C₄ alkanediyl;
X is O or NR⁷;
Z is a chemical bond, PO₂, SO₂, or C=O, Z more particularly being C=O;
Y is a chemical bond, CH₂, or CHCH₃, Y more particularly being a chemical bond; and
R⁷ where present is C₁-C₆ alkyl.

2. Coating method according to Claim 1, **characterized in that** R¹ and R² are each hydrogen or C₁-C₆ alkyl, more particularly methyl or ethyl, and/or **characterized in that** R³ is hydrogen.

3. Coating method according to Claim 1 or 2, **characterized in that** A is ethanediyl, X is O, Z is C=O, and Y is a chemical bond.

4. Coating method according to any of Claims 1 to 3, **characterized in that** the compound (B) is constructed from polymerized ethylenically unsaturated compounds (M), the compounds (M) comprising at least 10 wt%, based on the total amount of the ethylenically unsaturated compounds forming the polymer, of at least one compound of the formula I 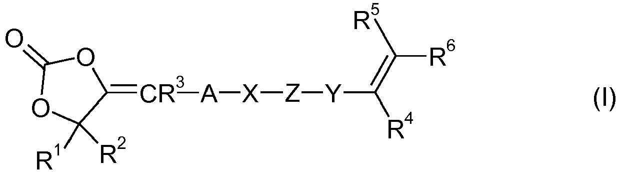 and
in which A, X, Y, Z, R¹, R², and R³ have the definitions stated in any of the preceding claims, and
R⁴ is hydrogen, C₁-C₄ alkyl, CH₂COOR⁸, phenyl, or phenyl-C₁-C₄ alkyl;
R⁵ and R⁶ independently of one another are hydrogen or C₁-C₄ alkyl, or else one of the radicals, R⁵ or R⁶, may be COOR⁸ or CH₂COOR⁸, and
R⁸ where present is hydrogen or C₁-C₆ alkyl.

5. Coating method according to any of Claims 1 to 4, **characterized in that** the compound (B) is constructed from 10 to 80 wt%, preferably 25 to 70 wt%, and more preferably 35 to 65 wt% of at least one compound of the formula I and 20 to 90 wt%, preferably 30 to 75 wt%, more particularly 35 to 65 wt% of at least one monoethylenically unsaturated comonomer (b), the wt% figures being based in each case on the total weight of all compounds (I) plus all comonomers (b).

6. Coating method according to any of Claims 1 to 5, **characterized in that** the compound (B) comprises at least two monoethylenically unsaturated comonomers (b) different from one another, preferably 2 to 6 monoethylenically unsaturated comonomers (b) different from one another.

7. Coating method according to any of Claims 1 to 6, **characterized in that** the comonomers are selected from the group of esters of monoethylenically unsaturated aliphatic monocarboxylic acids with aliphatic alkanols, or esters of monoethylenically unsaturated aliphatic monocarboxylic acids with cycloaliphatic alkanols, or vinylaromatic hydrocarbons, or mixtures of at least two of these comonomers (b).

8. Coating method according to any of Claims 1 to 7, **characterized in that** the polyols (A) have an OH number of 30 to 400 mg KOH/g, more particularly between 70 and 300 mg KOH/g.

9. Coating method according to any of Claims 1 to 8, **characterized in that** the polyols (A) have an acid number of between 0 and 10 mg KOH/g, preferably between 0 and 5 mg KOH/g, and very preferably of less than 1 mg KOH/g.

10. Coating method according to any of Claims 1 to 9, **characterized in that** the polyols (A) are polyester polyols, polyurethane polyols, polysiloxane polyols, polyacrylate polyols, polymethacrylate polyols, or mixtures of these polyols, more particularly polyester polyols, polyacrylate polyols, polymethacrylate polyols, or mixtures of polyester polyols and poly(meth)acrylate polyols.

11. Coating method according to any of Claims 1 to 10, **characterized in that** the coating material comprises
i. 10 to 69.99 wt%, preferably from 20 to 59.9 wt%, of at least one polyhydroxyl group-containing polyester (A) or at least one polyhydroxyl group-containing poly(meth)acrylate (A) or at least one polyhydroxyl group-containing polyurethane (A), or a mixture of at least one polyhydroxyl group-containing polyester (A) and/or at least one polyhydroxyl group-containing poly(meth)acrylate (A) and/or at least one polyhydroxyl group-containing polyurethane,
ii. 89.99 to 30 wt%, preferably from 79.9 to 40 wt%, of at least one compound (B),
iii. 0 to 20 wt%, preferably from 0 to 10 wt%, of at least one compound (C), and
iv. 0.01 to 10 wt% of at least one catalyst (D),
the wt% figures being based in each case on the binder fraction of the coating material, and the sum of all components (A), (B), optionally (C), and (D) being in each case 100 wt%.

12. Coating method according to any of Claims 1 to 11, **characterized in that** the catalyst (D) is an amine and/or a zinc-amidine complex.

13. Coating method according to any of Claims 1 to 12, **characterized in that** application of the pigmented basecoat film is followed by drying of the applied basecoat first at temperatures from room temperature to 80°C, and application of the coating material composition according to any of Claims 1 to 12 is followed by curing at temperatures from 20 to 200°C, for a time of from one minute up to 10 hours.

14. Use of the method according to any of Claims 1 to 13 for automotive OEM finishing, the finishing of parts for installation in or on automobiles, and/or of commercial vehicles, and automotive refinish.

15. Multicoat effect and/or color paint system comprising at least one pigmented basecoat film and at least one clearcoat film disposed thereon, **characterized in that** it has been produced by a method according to any of Claims 1 to 13.

## Revendications

1. Procédé de revêtement multicouche, selon lequel une couche de vernis de base pigmentée, puis une couche d'une composition d'agent de revêtement non aqueuse contenant (A) au moins un composé oligomère et/ou polymère (A) contenant au moins deux groupes hydroxyle,
(B) au moins un composé oligomère et/ou polymère (B) contenant au moins deux groupes alkylidène-1,3-dioxolan-2-one, ainsi que
(D) au moins un catalyseur pour la réticulation,
sont appliquées sur un substrat éventuellement pré-revêtu, **caractérisé en ce que** le composé (B) contient au moins deux groupes alkylidène-1,3-dioxolan-2-one de formule (I') 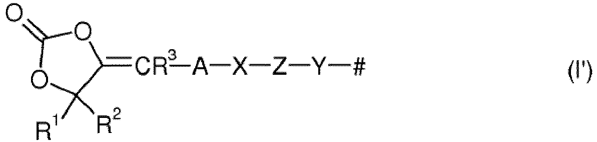
dans laquelle # représente la liaison au squelette polymère, et
R¹, R² représentent indépendamment l'un de l'autre hydrogène, alkyle en C₁-C₆, alcoxy en C₁-C₄-alkyle en C₁-C₄, cycloalkyle en C₅-C₆, phényle ou phényl-alkyle en C₁-C₄ ;
R³ représente hydrogène, alkyle en C₁-C₆, alcoxy en C₁-C₄-alkyle en C₁-C₄, cycloalkyle en C₅-C₆, phényle ou phényl-alkyle en C₁-C₄, R³ représentant notamment hydrogène ;
A représente une liaison chimique ou alcanediyle en C₁-C₄, A représentant notamment alcanediyle en C₁-C₄ ;
X représente O ou NR⁷ ;
Z représente une liaison chimique, PO₂, SO₂ ou C=O, Z représentant notamment C=O ;
Y représente une liaison chimique, CH₂ ou CHCH₃, Y représentant notamment une liaison chimique ;
R⁷ représente, s'il est présent, alkyle en C₁-C₆.

2. Procédé de revêtement selon la revendication 1, **caractérisé en ce que** R¹ et R² représentent chacun hydrogène ou alkyle en C₁-C₆, notamment méthyle ou éthyle, et/ou **en ce que** R³ représente hydrogène.

3. Procédé de revêtement selon la revendication 1 ou 2, **caractérisé en ce qu'**A représente éthanediyle, X représente O, Z représente C=O et Y représente une liaison chimique.

4. Procédé de revêtement selon l'une quelconque des revendications 1 à 3, **caractérisé en ce que** le composé (B) est formé à partir de composés éthyléniquement insaturés polymérisés (M), les composés (M) comprenant au moins 10 % en poids, par rapport à la quantité totale des composés éthyléniquement insaturés formant le polymère, d'au moins un composé de formule I 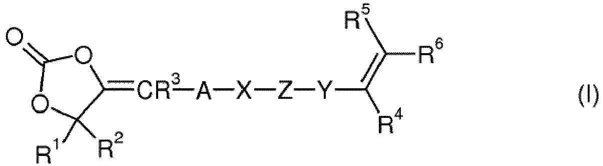 et
dans laquelle A, X, Y, Z, R¹, R² et R³ ont les significations indiquées dans l'une quelconque des revendications précédentes, et
R⁴ représente hydrogène, alkyle en C₁-C₄, CH₂COOR⁸, phényle ou phényl-alkyle en C₁-C₄ ;
R⁵, R⁶ représentent indépendamment l'un de l'autre hydrogène ou alkyle en C₁-C₄, ou un des radicaux R⁵ ou R⁶ peut également représenter COOR⁸ ou CH₂COOR⁸,
R⁸ représente, s'il est présent, hydrogène ou alkyle en C₁-C₆.

5. Procédé de revêtement selon l'une quelconque des revendications 1 à 4, **caractérisé en ce que** le composé (B) est formé à partir de 10 à 80 % en poids, de préférence 25 à 70 % en poids, et de manière particulièrement préférée 35 à 65 % en poids, d'au moins un composé de formule I, et 20 à 90 % en poids, de préférence 30 à 75 % en poids, et de manière particulièrement préférée 35 à 65 % en poids, d'au moins un comonomère monoéthyléniquement insaturé (b), les données de % en poids se rapportant à chaque fois au poids total de tous les composés (I) plus tous les comonomères (b).

6. Procédé de revêtement selon l'une quelconque des revendications 1 à 5, **caractérisé en ce que** le composé (B) contient au moins deux comonomères monoéthyléniquement insaturés (b) différents les uns des autres, de préférence 2 à 6 comonomères monoéthyléniquement insaturés (b) différents les uns des autres.

7. Procédé de revêtement selon l'une quelconque des revendications 1 à 6, **caractérisé en ce que** les comonomères sont choisis dans le groupe des esters d'acides monocarboxyliques aliphatiques monoéthyléniquement insaturés avec des alcanols aliphatiques ou des esters d'acides monocarboxyliques aliphatiques monoéthyléniquement insaturés avec des alcanols cycloaliphatiques ou des hydrocarbures aromatiques de vinyle ou des mélanges d'au moins 2 de ces comonomères (b).

8. Procédé de revêtement selon l'une quelconque des revendications 1 à 7, **caractérisé en ce que** les polyols (A) présentent un indice OH de 30 à 400 mg KOH/g, notamment compris entre 70 et 300 mg KOH/g.

9. Procédé de revêtement selon l'une quelconque des revendications 1 à 8, **caractérisé en ce que** les polyols (A) présentent un indice d'acidité compris entre 0 et 10 mg KOH/g, de préférence compris entre 0 et 5 mg KOH/g, et de manière tout particulièrement préférée de moins de 1 mg KOH/g.

10. Procédé de revêtement selon l'une quelconque des revendications 1 à 9, **caractérisé en ce que** les polyols (A) sont des polyester-polyols, des polyuréthane-polyols, des polysiloxane-polyols, des polyacrylate-polyols, des polyméthacrylate-polyols ou des mélanges de ces polyols, notamment des polyester-polyols, des polyacrylate-polyols, des polyméthacrylate-polyols ou des mélanges de polyester-polyols et de poly(méth)acrylate-polyols.

11. Procédé de revêtement selon l'une quelconque des revendications 1 à 10, **caractérisé en ce que** l'agent de revêtement contient :
i. 10 à 69,99 % en poids, de préférence 20 à 59,9 % en poids, d'au moins un polyester contenant des groupes polyhydroxyle (A) ou d'au moins un poly(méth)acrylate contenant des groupes polyhydroxyle (A) ou d'au moins un polyuréthane contenant des groupes polyhydroxyle (A) ou d'un mélange d'au moins un polyester contenant des groupes polyhydroxyle (A) et/ou d'au moins un poly(méth)acrylate contenant des groupes polyhydroxyle (A) et/ou d'au moins un polyuréthane contenant des groupes polyhydroxyle,
ii. 89,99 à 30 % en poids, de préférence 79,9 à 40 % en poids, d'au moins un composé (B),
iii. 0 à 20 % en poids, de préférence 0 à 10 % en poids, d'au moins un composé (C), et
iv. 0,01 à 10 % en poids d'au moins un catalyseur (D),
les données de % en poids se rapportant à chaque fois à la proportion de liant de l'agent de revêtement et la somme de tous les composants (A), (B), éventuellement (C) et (D) étant à chaque fois de 100 % en poids.

12. Procédé de revêtement selon l'une quelconque des revendications 1 à 11, **caractérisé en ce que** le catalyseur (D) est une amine et/ou un complexe de zinc-amidine.

13. Procédé de revêtement selon l'une quelconque des revendications 1 à 12, **caractérisé en ce qu'**après l'application de la couche de vernis de base pigmentée, le vernis de base appliqué est tout d'abord séché à des températures allant de la température ambiante à 80 °C et, après l'application de la composition d'agent de revêtement selon l'une quelconque des revendications 1 à 12, durci à des températures de 20 à 200 °C pendant une durée allant d'une minute à 10 heures.

14. Utilisation du procédé selon l'une quelconque des revendications 1 à 13 pour le vernissage de série d'automobiles, le vernissage de composants automobiles et/ou de véhicules utilitaires et le vernissage de réparation automobile.

15. Vernissage multicouche à effet et/ou colorant constitué par au moins une couche de vernis de base pigmentée et au moins une couche de vernis transparent agencée sur celle-ci, **caractérisé en ce qu'**il a été fabriqué par un procédé selon l'une quelconque des revendications 1 à 13.
